# EUROPÄISCHE PATENTSCHRIFT

(11) **EP 1 616 377 B1**
(45) Veröffentlichungstag und Bekanntmachung des Hinweises auf die Patenterteilung: **28.02.2007**
(21) Anmeldenummer: 04725688.8
(22) Anmeldetag: 05.04.2004
(51) Int. Cl.: H02G 9/02, H02G 9/06, H02G 1/10

(54) **PROTEKTOR FÜR KABEL UND ROHRLEITUNGEN**
PROTECTIVE DEVICE FOR CABLES AND CONDUITS
DISPOSITIF PROTECTEUR CONCU POUR DES CABLES ET DES CONDUITES

(30) Priorität: 04.04.2003 DE 20305462 U
(43) Veröffentlichungstag der Anmeldung: 18.01.2006
(73) Patentinhaber: Alberts, Bert F., 7833 GR Nieuw Amsterdam (NL)
(72) Erfinder: ALBERTS, Bert, F., NL-7833 GR Nieuw Amsterdam (NL); HUIJSKENS, Hermanus, Andreas, Maria, 9752 CC Haren (NL); MUCK, Lars, 26826 Weener (DE)
(74) Vertreter: Bakker, Hendrik
(86) Internationale Anmeldenummer: PCT/EP2004/003599
(87) Internationale Veröffentlichungsnummer: WO 2004/088810

(56) Entgegenhaltungen:
- WO-A-01/24336
- DE-C- 394 695
- FR-A- 2 756 114
- US-A- 1 822 624

## Beschreibung

Die Erfindung betrifft.eine Schutzvorrichtung für Kabel und Rohrleitungen, insbesondere Seekabel, mit einer Mehrzahl von Rohrhälften, von denen jeweils zwei zusammengefügte Rohrhälften ein Rohrelement bilden und in Reihe miteinander verbundene Rohrelemente ein Rohr zur Aufnahme eines Kabels oder einer Rohrleitung bilden, wobei die Rohrelemente jeweils an einem ersten Ende einen kugelförmigen Abschnitt und an einem zweiten, dem ersten Ende gegenüberliegenden Ende einen trichterförmigen Abschnitt aufweisen, der im Inneren des kugelförmigen Abschnitts eines benachbarten Rohrelements aufgenommen und festgehalten ist.

Die Erfindung betrifft ferner eine Rohrhälfte zur Bildung von Rohrelementen einer solchen Schutzvorrichtung sowie Zusatzelemente zur Verwendung in einer solchen Schutzvorrichtung, wie insbesondere Zwischenelemente, eine Klemmvorrichtung, eine Abdichtvorrichtung, eine Zentriervorrichtung und eine Aufnahmeröhre.

Seit der Verlegung des ersten Seekabels zwischen Frankreich und England im Jahr 1850 durch die Brüder Brett, gefolgt durch die Zerstörung des gleichen Kabels nur einen Tag nach der Fertigstellung durch einen französischen Fischer, der glaubte, ein Seeungeheuer gefangen zur haben, ist der Schutz von Kabeln vor Beschädigungen sowohl bei der Planung als auch bei der späteren Installation wichtig.

Obwohl Seekabel, je nach Einschätzung des Risikos, im Installationsgebiet in den Meeresboden eingebracht werden, gibt es Bereiche, in denen nur ein zusätzlicher mechanischer Schutz das Kabel für seine gesamte Betriebszeit verlässlich schützen kann. Solche Gebiete sind zum Beispiel:
- Felsküsten
- Korallenriffe
- besonders freiliegende Küsten.
Aus der US 18 22 624 ist ein erster mechanischer Schutz bekannt, der aus zwei Halbschalen besteht, der durch Taucher am Kabel montiert wurde.

Aus der japanischen Patentanmeldung JP 81 96 0 11 ist eine Schutzvorrichtung für ein Kabel bekannt, bei der das bis dahin nötige Verschrauben der jeweiligen Halbschalen - bis auf wenige Ausnahmen an Sicherheitspunkten - hinfällig wurde. Die Schutzvorrichtung besteht aus zwei Halbschalen, von denen jede einen Mittelabschnitt mit einem halbkreisförmigen Querschnitt aufweisen, an dem sich an beiden Enden halbkugelförmige Abschnitte anschließen. An einem Ende einer ersten Halbschale ist mittels Achsabschnitten eine zweiten Halbschale drehbar befestigt.

Aus der WO 0 124 336 ist eine Schutzvorrichtung für ein Kabel bekannt, das eine Montage von zwei identischen Halbschalen ohne Verschraubungen erlaubt. Die Schutzvorrichtung besteht aus einer Mehrzahl von identischen Rohrhälften, von denen zwei zusammengefügte Rohrhälften ein Rohrelement und in Reihe miteinander verbundene Rohrelemente ein Rohr zur Aufnahme eines Kabels bilden. Die so gebildeten Rohrelemente weisen jeweils an einem ersten Ende einen kugelförmigen Abschnitt auf und an einem zweiten, dem ersten Ende gegenüberliegenden Ende einen trichterförmigen Abschnitt. Die Rohrelemente werden miteinander verbunden, indem im Inneren eines kugelförmigen Abschnitts der trichterförmige Abschnitt eines benachbarten Rohrelements aufgenommen und festgehalten wird.

Bei allen oben aufgeführten Entwicklungen wurde dabei einzig und allein auf die mechanischen Eigenschaften der Schutzvorrichtung Wert gelegt.

Neben Seekabeln können solche Schutzvorrichtungen auch für andere Kabel und für andere rohrförmige Elemente als Schutz vor Beschädigung eingesetzt werden, wie beispielsweise für Rohrleitungen (z.B. Gasleitungen oder Wasserleitungen). Solche Rohrleitungen sind insbesondere zwischen Festland und Inseln verlegt, um die Inselbewohner mit beispielsweise Gas oder Frischwasser zu versorgen. Darüber hinaus können solche Schutzvorrichtungen auch zur Beschwerung solcher Rohrleitungen eingesetzt werden, damit diese nicht aufgeschwemmt werden, was insbesondere im Wattenmeer häufiger geschehen kann.

In den letzten Jahren wurde bei einer gesteigerten Installationsquote von Kabeln festgestellt, dass durch mechanische Schutzvorrichtungen geschützte Kabel immer häufiger durch Fischereiaktivitäten beschädigt wurden. Im besonderen sind hierbei die stark befischten Gebiete in der Nord- und Ostsee zu nennen.

Es ist daher Aufgabe der Erfindung, eine Schutzvorrichtung für Kabel und Rohrleitungen bereitzustellen, die ein Kabel bzw. eine Rohrleitung schützt, aber gleichzeitig so geformt ist, dass ein Auffischen durch Bodennetze verhindert wird.

Zugleich soll die Schutzvorrichtung bevorzugt handlich bezüglich Länge und Gewicht sein, SI-Einheiten entsprechen (metrisches System), einfach und preiswert herzustellen sein und aus zwei identischen Halbschalen bestehen. Die Installation muss möglich sein durch Taucher im Wasser nach der Verlegung oder an Bord von Installationsschiffen während der Verlegung. Die Montage soll mittels einfacher Hilfsmittel im Wasser durch einen Taucher zu bewerkstelligen oder an Bord im Fliessbandverfahren mit maximal 4-5 Personen durchzuführen sowie möglichst ohne Verschrauben eines jeden Segments möglich sein. Die mechanischen Eigenschaften bezüglich BruchDehnung, Biegung und Korrosion sollen der Betriebsdauer des Kabels entsprechen. Des weiteren soll jedes Segment frei drehbar sein und keine scharfen Kanten und hervorstehende Ecken oder Kanten besitzen.

Schließlich sind als Ausgestaltungen geeignete Zusatzelemente zur Verwendung bei der erfindungsgemäßen Schutzvorrichtung angegeben, nämlich insbesondere Zwischenelemente zur Verbindung zweier sich zwei mit dem identischen Ende gegenüber liegender Rohrelemente, eine Klemmvorrichtung zur Klemmung und/oder Zentrierung eines Kabels oder einer Rohrleitung innerhalb eines Rohrelements, eine Abdichtvorrichtung zur Abdichtung einer Röhrenöffnung einer zur Aufnahme des Endes des aus einer Anzahl von Rohrelementen gebildeten Rohrs vorgesehenen Aufnahmeröhre und eine Zentriervorrichtung zur äußerlichen Anbringung an einem Rohrelement zur Zentrierung und Klemmung des Endes des aus einer Anzahl von Rohrelementen gebildeten Rohrs in einer zur Aufnahme des Rohrs vorgesehenen Aufnahmeröhre.

Die Aufgabe hinsichtlich der Schutzvorrichtung wird durch eine Schutzvorrichtung gemäß Anspruch 1 gelöst.

Durch die erfindungsgemäße Lösung wird eine Vorrichtung zum Schutz von Kabeln und Rohrleitungen bereitgestellt, die vorteilhafterweise eine glatte Innen- und Außenhaut aufweist, die ohne Haken auskommt, die abbrechen können, bei der die Verschraubungen im Inneren liegen, bei der das Verschrauben vorgeformte Halterungen vereinfacht ist, die Einhaltung eines Mindestbiegeradius gewährleistet ist und die Identifikationsmerkmale aufweist. Insbesondere ist an den Verbindungsstellen zwischen zwei benachbarten Rohrelementen die innenseite glatt ausgestaltet, um dort das zu schützende Kabel bzw. die zu schützende Rohrleitung nicht zu beschädigen, wenn die miteinander verbundenen Rohrelemente an den Verbindungsstellen gegeneinander verschwenkt werden, was in einem bestimmten Bereich zulässig ist. Außerdem sollen die Abstände zwischen den Verbindungsstellen möglichst gering ausgestaltet sein.

In einer weiteren Ausführungsform sind die in Eingriff stehenden Bereiche als Einschnitte in den kugelförmigen Abschnitt und als Verlängerungen der kugelförmigen Abschnitte ausgebildet.

Vorzugsweise weisen die Rohrhälften an dem kugelförmigen Abschnitt jeweils einen Einschnitt und eine Verlängerung auf. Diese sind bevorzugt jeweils etwa z-förmig und komplementär zueinander ausgestaltet

In einer bevorzugten Ausführungsform können der Einschnitt und die Verlängerung einer ersten Rohrhälfte mit dem Einschnitt und der Verlängerung einer zweiten Rohrhälfte durch eine Schwenkbewegung der beiden Rohrhälften zueinander werkzeuglos miteinander in Eingriff gebracht werden. Dies ermöglicht eine sehr einfache Montage.

Vorzugsweise sind am trichterförmigen Abschnitt an der Innenseite der Rohrhälften Befestigungsmittel vorgesehen, um die Verbindung der beiden Rohrhälften miteinander zu verbessern.

In einer weiteren Ausführungsform sind am kugelförmigen Abschnitt durch ein Rohrelement verlaufende Verschraubungslöcher vorgesehen zur weiteren Befestigung der Rohrhälften miteinander.
Vorzugsweise sind die Verschraubungslöcher so ausgebildet sind, dass Schrauben und Muttern darin versenkt werden können.

In einer bevorzugten Ausführungsform ist vorgesehen, dass die Verschraubungslöcher auf einer Seite eines Rohrelements eine eingesetzte Mutter drehfest festhalten, so dass kein zusätzliches Werkzeug zum Festziehen benötigt wird.

Vorzugsweise ist vorgesehen, dass die ein Rohr bildenden Rohrelemente sich gegeneinander soweit verschwenken lassen, dass der Mindestbiegeradius eines im Rohrelement befindlichen Kabels oder einer Rohrleitung nicht unterschritten wird.

In einer weiteren Ausführungsform ist vorgesehen, dass die Rohrhälften aus duktilem Eisen (Sphäroguss) oder anderen geeigneten, insbesondere seewassergeeigneten Materialien gefertigt sind.

Bevorzugt sind außerdem an den Rohrelementen Biegungsbegrenzungsmittel zur Begrenzung des Biegeradius der Schutzvorrichtung vorgesehen. In einer vorteilhaften Ausgestaltung ist dazu an der innen liegenden Oberfläche des kugelförmigen Abschnitts eine Randbegrenzung zur Biegungsbegrenzung angeordnet.

Ferner kann bei der erfindungsgemäßen Schutzvorrichtung der maximale Biegeradius des aus den Rohrelementen gebildeten Rohrs eingestellt werden, indem die Rohrelemente die Länge der Rohrelemente geeignet gewählt wird. Bevorzugt sind somit Rohrelemente unterschiedlicher Längen verfügbar. Durch Aneinanderreihung kürzerer Rohrelemente kann der Biegeradius verringert werden verglichen mit einer Aneinanderreihung längerer Rohrelemente.

Die Lösung der Aufgabe hinsichtlich der Rohrhälfte wird durch eine Rohrhälfte für eine Schutzvorrichtung für Kabel und Rohrleitungen erreicht mit einem halbkugelförmigen Abschnitt an einem ersten Ende und einer Trichterhälfte an einem zweiten, dem ersten Ende gegenüberliegenden Ende, wobei zwei zusammengefügte Rohrhälften ein Rohrelement bilden, das jeweils an einem ersten Ende einen kugelförmigen Abschnitt aufweist und an einem zweiten, dem ersten Ende gegenüberliegenden Ende, einen trichterförmigen Abschnitt aufweist, der im Inneren des kugelförmigen Abschnitts eines benachbarten Rohrelements aufgenommen und festgehalten werden kann, wobei in Reihe miteinander verbundene Rohrelemente ein Rohr zur Aufnahme eines Kabels oder einer Rohrleitung bilden, die dadurch gekennzeichnet ist, dass Einschnitte in den halbkugelförmigen Abschnitt eingebracht und Verlängerungen am halbkugelförmigen Abschnitte angeordnet sind, welche bei Verbindung zweier Rohrhälften zur Bildung eines Rohrelements miteinander in Eingriff stehen.

Weitere Ausgestaltungen betreffen auch Zwischenelemente, die vorteilhaft bei der erfindungsgemäßen Schutzvorrichtung eingesetzt werden können zur Verbindung zweier, aus jeweils zwei Rohrhälften gebildeten Rohrelemente, die jeweils an einem ersten Ende einen kugelförmigen Abschnitt und an einem zweiten, dem ersten Ende gegenüberliegenden Ende einen trichterförmigen Abschnitt aufweisen, der im Inneren des kugelförmigen Abschnitts eines benachbarten Rohrelements aufgenommen und festgehalten werden kann, und die sich mit dem jeweiligen kugelförmigen bzw. trichterförmigen Abschnitt, also mit identischen Abschnitten, gegenüber liegen. In einer ersten Ausgestaltung ist eine solches Zwischenelement aus zwei identischen Zwischenelementhälften gebildet und weist an beiden Enden einen trichterförmigen Abschnitt auf, der zur Aufnahme und zum Festhalten im Inneren des kugelförmigen Abschnitts des benachbarten der zwei sich gegenüber liegenden Rohrelemente ausgebildet ist.

In einer zweiten Ausgestaltung ist eine solches Zwischenelement aus zwei identischen Zwischenelementhälften gebildet und weist an beiden Enden einen Endabschnitt auf, der zur Aufnahme und zum Festhalten des trichterförmigen Abschnitts des benachbarten der zwei sich gegenüber liegenden Rohrelemente im Inneren ausgebildet ist. Auch diese Zwischenelemente weisen eine glatte Außenfläche auf, so dass ein ungewolltes Auffischen verhindert wird. Außerdem können zumindest die zur Verbindung von sich mit den trichterförmigen Enden gegenüber liegenden Rohrelemente vorgesehenen Zwischenelemente angebracht werden, ohne die beiden zur verbindenden Rohrelemente nochmals auseinander zu nehmen.

Zur Klemmung und/oder Zentrierung eines Kabels oder einer Rohrleitung innerhalb eines aus jeweils zwei Rohrhälften gebildeten Rohrelements der beschriebenen Art ist ferner eine Klemmvorrichtung vorgesehen, die dadurch gekennzeichnet ist, dass die Klemmvorrichtung ringförmig und nach außen biegsam ausgestaltet ist, einen dem Innendurchmesser des Rohrelements angepassten Außendurchmesser, an der äußeren Oberfläche wenigstens eine ringförmig verlaufende Nut und einen konisch verlaufenden Innendurchmesser aufweist, wobei der Innendurchmesser an der engsten Stelle geringer ist als der Außendurchmesser des zu klemmenden Kabels bzw. der zu klemmenden Rohrleitung. Mit einer solchen Klemmvorrichtung lässt sich das Kabel bzw. die Rohrleitung auf einfache Weise, aber effektiv und fest innerhalb eine Rohrelements fixieren, um ein ungewolltes Verrutschen des Kabels bzw. Rohrelements innerhalb der Schutzvorrichtung zu verhindern. Solche Klemmvorrichtungen werden bevorzugt in gewissen Abständen, z.B. alle 10m, innerhalb der Schutzvorrichtung angebracht.

In einer konstruktiv einfachen, leicht zu montierenden Ausgestaltung ist vorgesehen, dass die Klemmvorrichtung mindestens zwei zusammen steckbare oder klemmbare Klemmvorrichtungselemente aufweist.

In einer weiteren Ausgestaltung ist ferner vorgesehen, dass die Klemmvorrichtung wenigstens zwei ringförmig verlaufende Nuten aufweist und dass die engste Stelle mit dem geringsten Innendurchmesser zwischen den wenigstens zwei Nuten liegt. Bei dieser Ausgestaltung kann eine besonders gute Klemmung erreicht werden, da sich beim Einlegen des Kabels bzw. der Rohrleitung die engste Stelle nach außen dehnt und so an die Innenwand des Rohrelements stößt, wodurch die Klemmung bewirkt wird.

Zur Abdichtung einer Röhrenöffnung einer zur Aufnahme des Endes des aus einer Anzahl von Rohrelementen der beschriebenen Art gebildeten Rohrs vorgesehenen Aufnahmeröhre ist in einer weiteren Variante eine Abdichtvorrichtung vorgesehen, die gekennzeichnet ist durch:
- ein zwei Rohrendstückhälften aufweisendes Rohrendstück, welches an dem dem Rohr zuweisenden ersten Ende einen kugelförmigen oder trichterförmigen Abschnitt aufweist, der mit dem trichterförmigen bzw. kugelförmigen Abschnitt des benachbarten letzten Rohrelements des Rohrs verbunden ist, und
- ein zwei Abdichthälften aufweisendes Abdichtelement, welches das zweite, dem ersten Ende gegenüber liegenden Ende des Rohrendstücks aufnimmt und festhält und wenigstens eine außen angeordnete, biegsame Lamelle aufweist, deren maximaler Außendurchmesser mindestens dem Innendurchmesser der Aufnahmeröhre entspricht.

Um eine besonders gute Klemmung und Abdichtung zu erreichen, ist bevorzugt vorgesehen, dass die Abdichthälfte dieser Abdichtvorrichtung mehrere in Richtung des ersten Endes des Rohrendstücks weisende Lamellen aufweist. Die Lamellen können dabei entweder alle den gleichen Durchmesser aufweisen. Die Durchmesser der Lamellen können aber auch zum trichterförmigen Ende des Rohrendstück hin ansteigen, um so für eine Anbringung in Aufnahmeröhren mit unterschiedlichen Durchmessern geeignet zu sein.

In einer weiteren Ausgestaltung der Abdichtvorrichtung ist bevorzugt vorgesehen, dass das Rohrendstück an der Außenseite mindestens einen Flansch und das Abdichtelement an der Innenseite mindestens eine komplementäre Nut zur Aufnahme des Flansches und zur festen Verbindung von Rohrendstück und Abdichtelement aufweist.

Zur äußerlichen Anbringung an einem Rohrelement zur Zentrierung und Klemmung des Endes des aus einer Anzahl von Rohrelementen der beschriebenen. Art gebildeten Rohrs in einer zur Aufnahme des Rohrs vorgesehenen Aufnahmeröhre ist in einer weiteren Ausgestaltung eine Zentriervorrichtung vorgesehen, die gekennzeichnet ist durch:
- zwei an den gegenüber liegenden Enden der Zentriervorrichtung angeordnete Ringklemmen mit einem dem Außendurchmesser des zu zentrierenden Rohrelements angepassten Innendurchmesser,
- mehrere an den zwei Ringklemmen angeordnete Abstandseinstellelemente zum Verstellen des Abstands zwischen den Ringklemmen, und
- mehrere zwischen den zwei Ringklemmen angeordnete, biegsame, beim Verringern des Abstands zwischen den Ringklemmen sich nach außen wölbende Lamellen.

In einer bevorzugten, konstruktiv einfachen Ausgestaltung der Zentriervorrichtung ist vorgesehen, dass als Abstandseinstellelemente mehrere, durch die Ringklemmen hindurch führende Gewindebolzen vorgesehen sind, die an mindestens einem Ende ein Gewinde aufweisen, so dass mittels einer auf das Gewinde aufgeschraubten Mutter der Abstand zwischen den Ringklemmen verringerbar ist.

In einer weiteren Ausgestaltung ist eine Aufnahmeröhre vorgesehen zur Aufnahme des Endes des aus einer Anzahl von Rohrelementen gebildeten Rohrs, wobei die Aufnahmeröhre eine äußere Röhre und eine innere, in der äußeren Röhre verschiebbare Röhre aufweist. Dadurch kann die Höhe des Endes des Rohrs über dem Meeresboden verändert werden, so dass das Ende möglichst auf dem Meeresboden aufliegt. Beispielsweise treten häufig rund um den Befestigungspunkt des in den Meeresboden gerammten Sockels einer Ölplattform oder einer Off-Shore-Windenergieanlage muldenartige Vertiefungen im Meeresboden auf. Damit auch in solchen Situationen das Endes des Rohres dort möglichst auf dem Meeresboden aufliegt, kann das in der inneren Röhre befestigte Ende des Rohres bei dieser Ausgestaltung der Aufnahmeröhre auf den Meeresboden abgelassen werden. Dies vermeidet spätere Beschädigungen des Rohres bzw. des darin geschützten Kabels oder der darin geschützten Rohrleitung.

Die Zeichnung veranschaulicht die Erfindung anhand von Ausführungsbeispielen. Es zeigen:
- Fig. 1: zwei Rohrhälften,
- Fig. 2: zwei zu einem Rohrelement zusammengefügte Rohrhälften,
- Fig. 3: ein Kabel, das teilweise mit Rohrhälften verkleidet ist,
- Fig. 4: mehrere zu einem Rohr zusammengesetzte Rohrelemente,
- Fig. 5: eine perspektivische Darstellung der halbkugelförmigen Abschnitte von zwei übereinander liegenden Rohrhälften,
- Fig. 6: eine perspektivische Darstellung, eines halbkugelförmigen Abschnitts einer Rohrhälfte,
- Fig. 7: eine weitere perspektivische Darstellung eines halbkugelförmigen Abschnitts einer Rohrhälfte,
- Fig. 8: eine perspektivische Darstellung von einem Rohrelement, durch das ein Kabel geführt ist,
- Fig. 9: eine perspektivische Darstellung einer Trichterhälfte von zwei übereinander liegenden Rohrhälften,
- Fig. 10: eine perspektivische Darstellung einer Trichterhälfte,
- Fig. 11: eine weitere perspektivische Darstellung eines Trichterhälfte,
- Fig. 12: einen ersten Schritt der Montage der Vorrichtung,
- Fig. 13: einen zweiten Schritt der Montage,
- Fig. 14: einen dritten Schritt der Montage,
- Fig. 15: einen vierten Schritt der Montage,
- Fig. 16: eine Draufsicht auf zwei miteinander verbundene Rohrelemente,
- Fig. 17: eine perspektivische Darstellung von zwei miteinander verbundenen Rohrelementen,
- Fig. 18: eine Draufsicht auf zwei in Reihe-angeordnete Rohrhälften,
- Fig. 19: erfindungsgemäße Rohrelemente in verschiedenen Längen,
- Fig. 20: ein erstes Zwischenelement,
- Fig. 21: ein zweites Zwischenelement,
- Fig. 22: die Anwendung des zweiten Zwischenelements zur Verbindung von Rohrelementen,
- Fig. 23: eine Klemmvorrichtung zur Klemmung und/oder Zentrierung eines Kabels oder einer Rohrleitung innerhalb eines Rohrelements,
- Fig. 24: die Anwendung einer in Fig. 23 gezeigten Klemmvorrichtung,
- Fig. 25: eine Abdichtvorrichtung zur Abdichtung einer Röhrenöffnung einer Aufnahmeröhre,
- Fig. 26: eine Rohrendstückhälfte eines Rohrendstücks einer Abdichtvorrichtung,
- Fig. 27: eine Abdichtvorrichtung mit Rohrendstück und Abdichtelement,
- Fig. 28: die Anwendung der in Fig. 25 gezeigten Abdichtvorrichtung,
- Fig. 29: eine Zentriervorrichtung zur Zentrierung und Klemmung des Endes des aus einer Anzahl von Rohrelementen gebildeten Rohrs in einer Aufnahmeröhre
- Fig. 30: die Anwendung der in Fig. 29 gezeigten Zentriervorrichtung,
- Fig. 31: eine neue Ausgestaltung einer Aufnahmeröhre und deren Anwendung und
- Fig. 32: weitere Ausgestaltungen von Aufnahmeröhren.

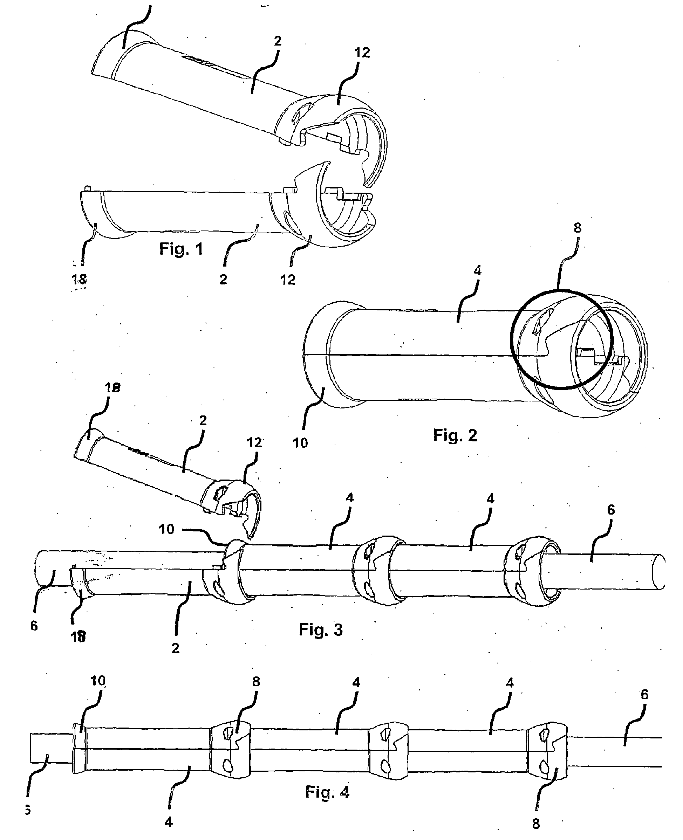

Es wird zunächst auf die Fig. 1 bis 4 Bezug genommen.

Die Vorrichtung zum Schutz von Kabeln oder Rohrleitungen besteht aus einer Mehrzahl von identischen Rohrhälften 2, die aus einem seewassergeeigneten Material gefertigt sind. Zusammengefügt bilden zwei Rohrhälften 2 ein Rohrelement 4. Diese Rohrelemente 4 werden in Reihe angeordnet miteinander verbunden und bilden ein Rohr, in dem ein Kabel 6 oder eine Rohrleitung (z.B. eine Wasser- oder Gasleitung) aufgenommen und vor Beschädigungen geschützt ist.

Die Rohrelemente 4 weisen an einem ersten Ende einen kugelförmigen Abschnitt 8 und an einem zweiten Ende einen trichterförmigen Abschnitt 10 auf. Die Rohrelemente 4 werden zu einem Rohr verbunden, indem zwei Rohrhälften 2 so zusammengefügt werden, dass der trichterförmige Abschnitt 10 eines ersten Rohrelementes von dem kugelförmigen Abschnitt 8 eines zweiten Rohrelements aufgenommen und festgehalten wird.

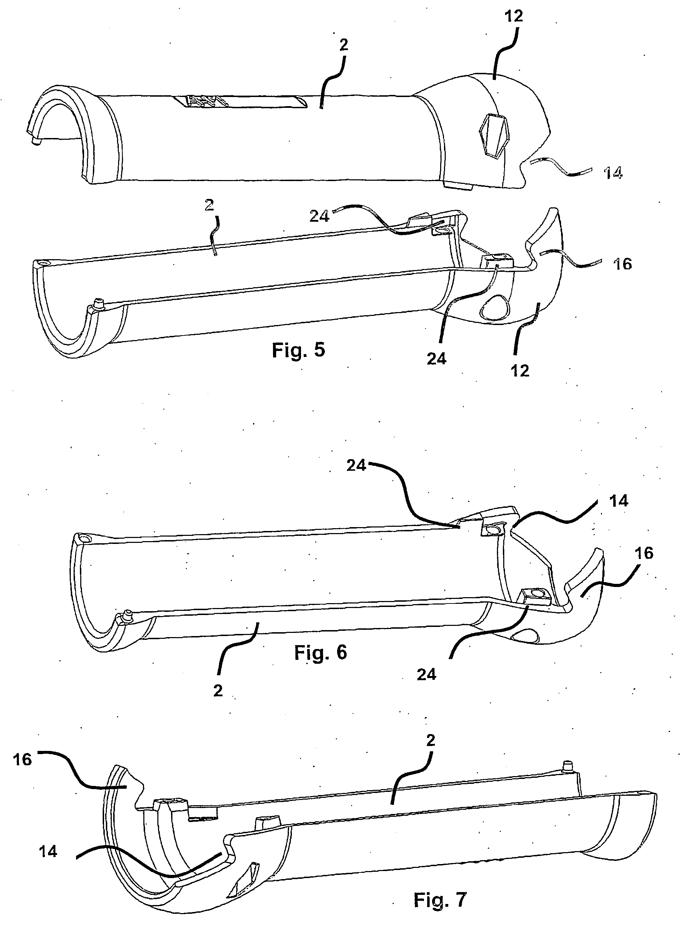

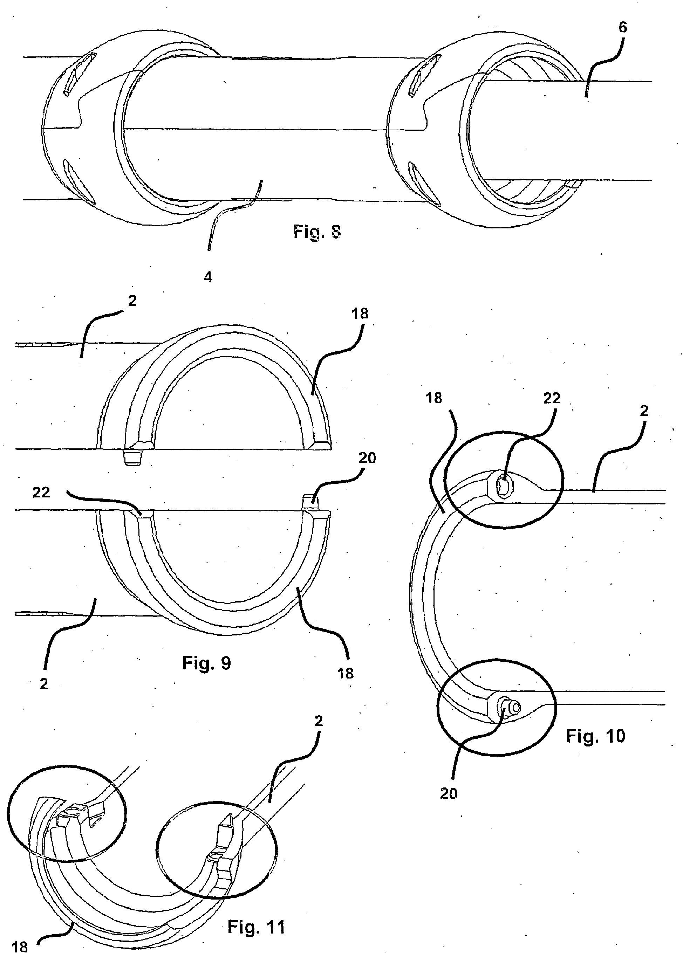

Es wird nun auf die Fig. 5 bis 8 Bezug genommen.

Jede Rohrhälfte 2 weist an einem Ende einen halbkugelförmigen Abschnitt 12 auf, der zusammengefügt mit einer zweiten Rohrhälfte 2 den kugelförmigen Abschnitt 8 bildet. Jeder halbkugelförmige Abschnitt 12 weist einen Einschnitt 14 auf der einen Seite und eine Verlängerung 16 an der gegenüberliegenden Seite auf. Der Einschnitt 14 und die Verlängerung 16 einer Rohrhälfte 4 sind jeweils komplementär z-förmig ausgebildet, so dass der Einschnitt 14 und die Verlängerung 16 miteinander in Eingriff stehen und Längskräfte aufnehmen können, wenn zwei Rohrhälften 2 zu einem Rohrelement 4 zusammengefügt werden.

Es wird nun auf die Fig. 9 bis 13 Bezug genommen.

Jede Rohrhälfte 2 weist an dem Ende, das dem Ende mit dem halbkugelförmigen Abschnitt gegenüberliegt, eine Trichterhälfte 18 auf, die zusammengefügt mit einer zweiten Rohrhälfte 2 den trichterförmigen Abschnitt 10 bildet. Jede Trichterhälfte 18 weist einen Stift 20 auf der einen Seite und eine Bohrung 22 an der gegenüberliegenden Seite auf, die bei zwei zusammengefügten Rohrhälften 2 zur Aufnahme von Querkräften bei Biege- und Torsionsbeanspruchung dienen.

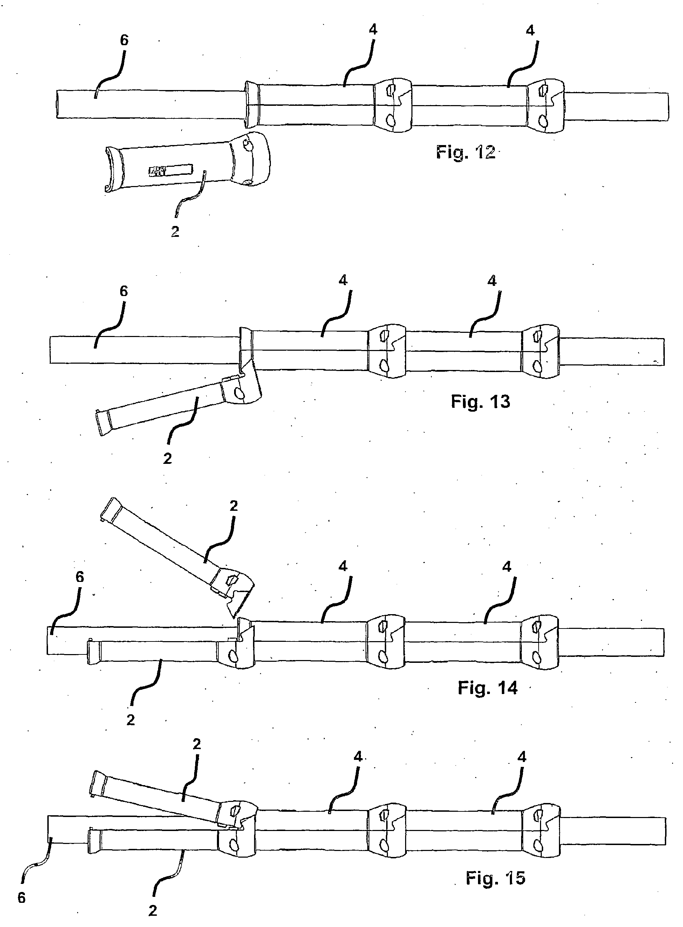

Es wird nun anhand der Fig. 12 bis 17 die Montage der Vorrichtung zum Schutz von Kabeln oder Rohrleitungen erläutert.

Es wird zuerst eine Rohrhälfte 2 so unter das Kabel bzw. die Rohrleitung gelegt, dass das Kabel bzw. die Rohrleitung frei im Inneren der Rohrhälfte 2 zu liegen kommt. Danach wird eine weitere Rohrhälfte 2 von oben seitlich eingeklickt und dann vollends auf die untere Rohrhälfte 2 aufgelegt, so dass der Einschnitt 14 und die Verlängerung 16 miteinander in Eingriff stehen.

Weitere Rohrhälften 2 werden angefügt, indem eine weitere untere Rohrhälfte 2 mit dem halbkugelförmigen Abschnitt 12 sowohl unter das Kabel 6 bzw. die Rohrleitung als auch unter das Ende mit der Trichterhälfte 18 gelegt wird. Anschließend wird eine weitere Rohrhälfte 2 schräg von oben kommend mit der unteren Rohrhälfte 2 durch Ineingriffbringen des Einschnitts 14 und der Verlängerung 16 verbunden. Sobald dies geschehen ist, können die beiden Rohrhälften 2 nicht mehr von einander gelöst werden.

Insbesondere beim letzten Rohrelement 4 eines Rohres, aber auch zur zusätzlichen Sicherheit, besteht die Möglichkeit, jedes Rohrelement 4 zu verschrauben. Dazu weist jede Rohrhälfte 2 Verschraubungslöcher 24 auf, die im Bereich des halbkugelförmigen Abschnitts 12 angeordnet sind. Die Verschraubungslöcher 24 sind auf der einen Seite so ausgebildet, dass eine Schraube 26, bspw. eine Innensechskantschraube, versenkt werden kann. Zugleich sind die Verschraubungslöcher 24 auf der gegenüberliegenden Seite so ausgebildet, dass eine eingesetzte Mutter 28 drehfest festgehalten wird und kein zusätzlicher Spanner zum Kontern der Mutter 28 benötigt wird.

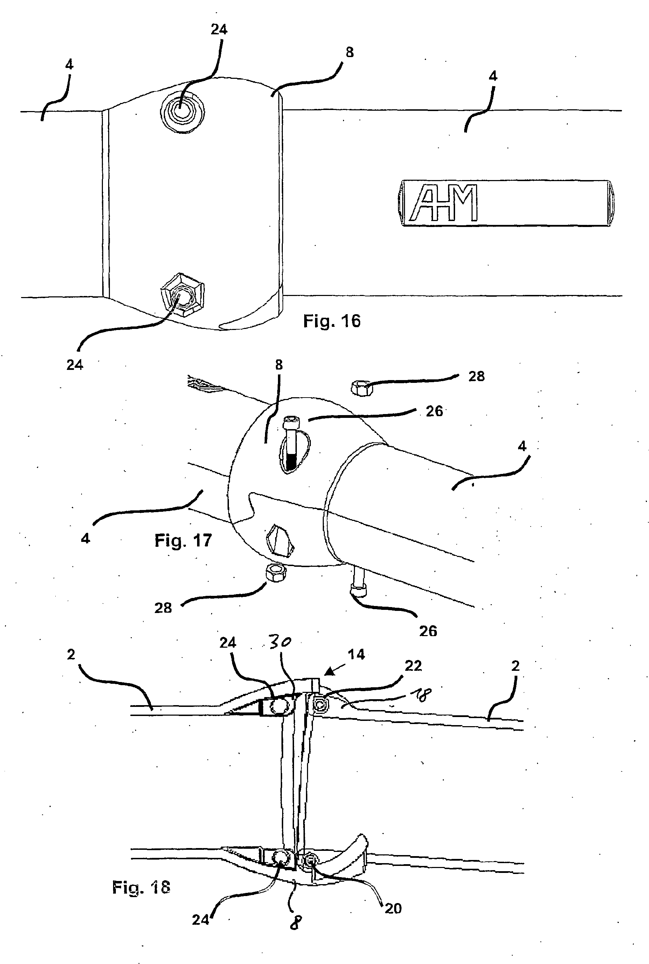

Er wird nun auf die Fig. 18 Bezug genommen.

Es lassen sich zwei miteinander verbundene Rohrelemente 4 gegeneinander verschwenken, so dass ein aus Rohrelementen 4 gebildetes Rohr sich dem Verlauf des Meeresbodens anpassen kann. Jedoch sind das Innere des halbkugelförmigen Abschnitts 12 und das Äußere der Trichterhälfte 18 so ausgebildet, dass sie die Schwenkbewegung begrenzen. So ist sichergestellt, dass der Mindestbiegeradius des zu schützenden Kabels nicht unterschritten wird und das Kabel sowohl auf dem Meeresboden als auch während der Verlegearbeiten vor einer Beschädigung durch zu starke Biegung geschützt ist.

Bevorzugt ist dazu, wie in Fig. 18 gezeigt, an der innen liegenden Oberfläche des halbkugelförmigen Abschnitts 12 eine Randbegrenzung 30 vorgesehen, deren Innendurchmesser etwa dem Innendurchmesser des trichterförmigen Abschnitts 18 entspricht. Dadurch stößt bei Biegung der miteinander verbundenen Rohrelemente der vordere Rand des trichterförmigen Abschnitts 18 an einer Stelle (in Fig. 18 am unteren Ende) an die Randbegrenzung 30, wodurch eine weitere Biegung des Rohrs verhindert wird.

Aus Sicherheits- und Qualitätsgründen kann des weiteren vorgesehen sein, dass Identifikationsmerkmale des geschützten Kabels bzw. der geschützten Rohrleitung und/oder der Schutzvorrichtung auf einem oder mehreren Rohrelementen, beispielsweise in gewissen Abständen der Schutzvorrichtung, von außen möglichst gut sichtbar aufgebracht sind. Derartige Identifikationsmerkmale können beispielsweise Herstellerangaben, Qualitätsangaben, Materialangaben, Kontaktinformationen oder die Art des geschützten Gegenstandes bzw. der Schutzvorrichtung sein.

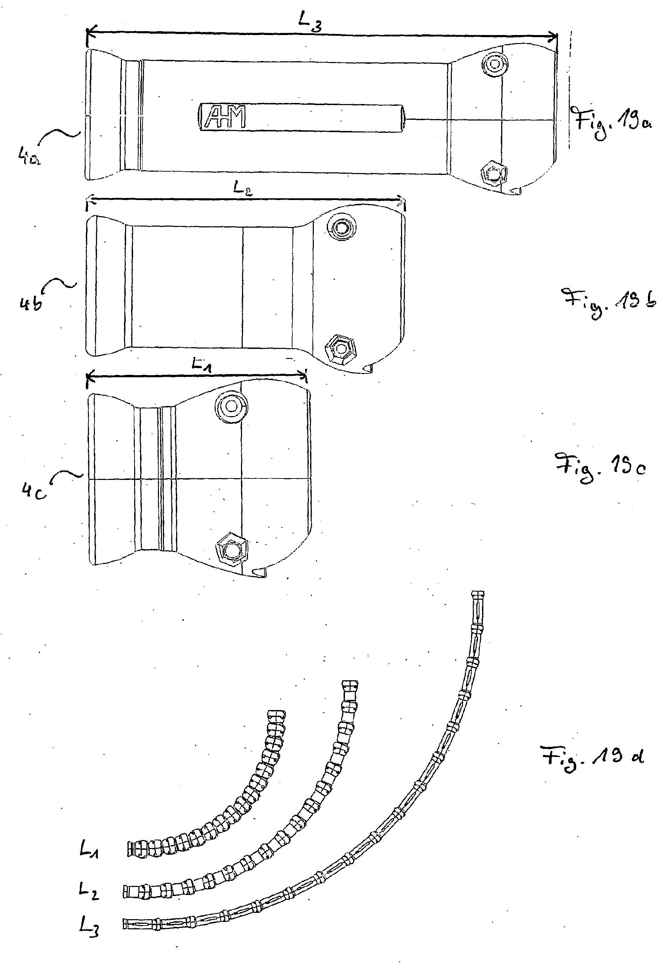

Fig. 19 zeigt erfindungsgemäße Rohrelemente 4a, 4b, 4c in verschiedenen Längen L1, L2, L3. Wie in Fig. 19 gezeigt, dienen die unterschiedlichen Längen dazu, um unterschiedliche Krümmungsradien des aus mehreren Rohrelementen 4 gebildeten Rohrs zu erreichen. Wie leicht erkennbar ist, kann mit den kürzesten Rohrelementen 4c der geringste Krümmungsradius eingestellt werden, während mit den längsten Rohrelementen 4a nur ein deutlich größerer Krümmungsradius eingestellt werden kann. Natürlich können auch Rohrelemente in wesentlich mehr unterschiedlichen Längen hergestellt und verwendet werden, was jedoch den Herstellungsaufwand erhöht. Ferner wird in der Praxis das Rohr natürlich aus Rohrelementen 4 unterschiedlicher Länge gebildet werden, je nach den Erfordernissen und Gegebenheiten bei der Verlegung des Rohrs am Meeresboden.

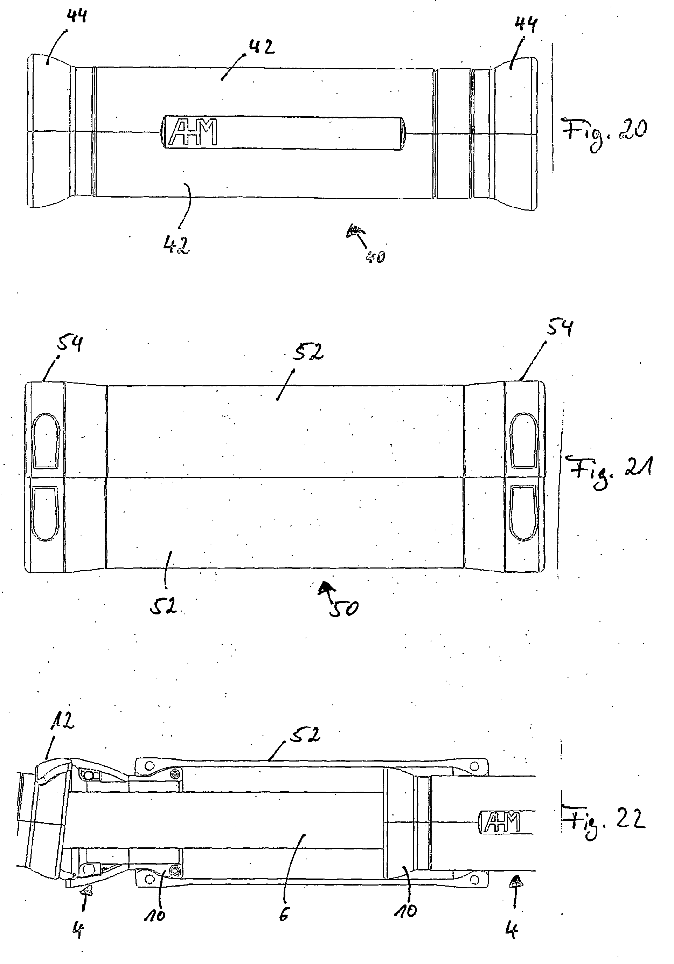

Um die Reihenfolge bei der Verlegung der Rohrelemente zu ändern, sind Rohrhälften vorgesehen, die statt eines kugelförmigen Abschnitts an einem ersten Ende und eines trichterförmigen Abschnitts an einem anderen Ende einen trichterförmigen Abschnitt an jedem Ende aufweisen, über den dann jeweils ein kugelförmiger Abschnitt eines benachbarten Rohrelements gelegt werden muss. Ein solches, als erstes Zwischenelement 40 bezeichnetes Rohrelement ist in Fig. 20 gezeigt. Dieses besteht aus zwei identischen Zwischenelementhälften 42 und weist an beiden Enden einen trichterförmigen Abschnitt 44 auf. Damit können zwei sich mit den kugelförmigen Enden gegenüberliegende Rohrelemente verbunden werden, wenn sich eine solche Situation beispielsweise beim abschnittsweisen Verlegen der Rohrelemente am Meeresboden ergibt. Ferner kann damit die Montageabfolge geändert werden, also beispielsweise von einer Reihenfolge, in der immer das kugelförmige Ende in Verlegerichtung vorne liegt in eine Reihenfolge, in der nun das trichterförmige Ende in Verlegerichtung vorne liegt.

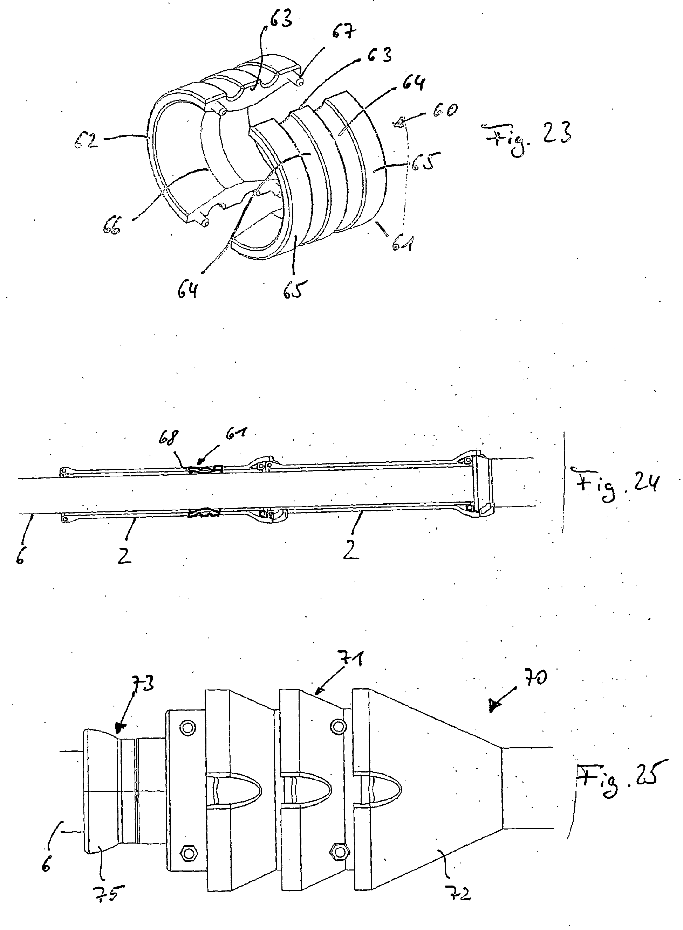

Ein entsprechendes zweites Zwischenelement 50 ist in Fig. 21 gezeigt. Dieses besteht ebenfalls aus zwei identischen Zwischenelementhälften 52 und weist an beiden Enden einen Endabschnitt 54 auf, der zur Aufnahme und zum Festhalten des trichterförmigen Abschnitts 10 (siehe Fig. 22) benachbarter Rohrelemente 4 im Innern ausgestaltet ist. Mit einem solchen Zwischenelement 50 können also zwei sich mit trichterförmigen Enden gegenüberliegende Rohrelemente 4 miteinander verbunden werden, oder es kann auch hier die Montageabfolge geändert werden, wie oben im Zusammenhang mit Fig. 20 erläutert wurde.

Eine Klemmvorrichtung 60 zur Klemmung und/oder Zentrierung eines Kabels oder einer Rohrleitung innerhalb eines Rohrelements ist in Fig. 23 gezeigt. Diese Klemmvorrichtung 60 ist ringförmig und aus einem biegsamen Material ausgestaltet, beispielsweise Kunststoff, so dass es sich nach außen biegen kann. Die Klemmvorrichtung ist aus zwei Klemmvorrichtungselementen 61, 62 gebildet, die mittels Verbindungsstiften 67 und entsprechenden Verbindungslöchern zusammengesteckt werden können. Zusammengesteckt weist die Klemmvorrichtung 60 zwei parallele umlaufende Nuten 64 auf, zwischen denen ein zentraler umlaufender Ring 63 und an den Rändern zwei umlaufende Ringe 65 gebildet sind. Ferner ist im Inneren dem zentralen Außenring 63 gegenüberliegend ein den Innendurchmesser verringernder Innenring 66 gebildet, zu dem hin der Innendurchmesser von außen her konisch verläuft, d.h., der Innendurchmesser ist am geringsten im Bereich des Innenrings 66 und am größten an den beiden Öffnungen der Klemmvorrichtung 60.

Der Außendurchmesser der Klemmvorrichtung 60 ist dem Innendurchmesser der Rohrelemente angepasst, d.h., der Außendurchmesser entspricht in etwa dem Innendurchmesser der Rohrelemente und ist allenfalls geringfügig kleiner als der Innendurchmesser der Rohrelemente. Der Innendurchmesser der Klemmvorrichtung 60 an der engsten Stelle 66 ist geringer als der Außendurchmesser des zu klemmenden Kabels bzw. der zu klemmenden Rohrleitung 6, so dass sich bei Montage der Klemmvorrichtung auf dem zu klemmenden Kabel bzw. der zu klemmenden Rohrleitung 6 der Außendurchmesser leicht vergrößert.

Bevorzugt erfolgt die Montage derart, dass zunächst in eine Rohrhälfte 2 (siehe Fig. 24) ein erstes Klemmvorrichtungselement, beispielsweise wie gezeigt das Klemmvorrichtungselement 61, eingelegt wird. Bevorzugt weist die Rohrhälfte 2 dazu einen geeigneten Aufnahmebereich 68 auf, in der das Klemmvorrichtungselement 61 genau hineinpasst. Sodann wird das zu klemmende Kabel bzw. die zu klemmende Rohrleitung 6 eingelegt, das zweite Klemmvorrichtungselement 62 übergestülpt und mit dem ersten Klemmvorrichtungselement 61 verbunden, bevor schließlich die zweite Rohrhälfte über die erste Rohrhälfte gesteckt wird. Durch Einlegen des Kabels bzw. der Rohrleitung 6 wird dieses gegen den Innenring 66 gedrückt, so dass sich die gesamte Klemmvorrichtung, insbesondere im zentralen Bereich 63, nach außen biegt und gegen die innere Oberfläche der Rohrhälften drückt, so dass sich eine sehr gute Klemmung ergibt: Die Klemmvorrichtung 60 verhindert somit selbst bei größeren Zieh- und Druckkräften auf das Kabel bzw. die Rohrleitung 6 ein Verrutschen des Kabels bzw. der Rohrleitung 6. Außerdem wird durch die Klemmvorrichtung eine sehr gute Zentrierung des Kabels bzw. der Rohrleitung 6 innerhalb der Rohrelemente bewirkt.

Grundsätzlich könnte in jedem Rohrelement eine solche Klemmvorrichtung verwendet werden. Bevorzugt wird eine solche Klemmvorrichtung jedoch nur in gewissen Abständen, beispielsweise in jedem zehnten Rohrelement, eingesetzt.

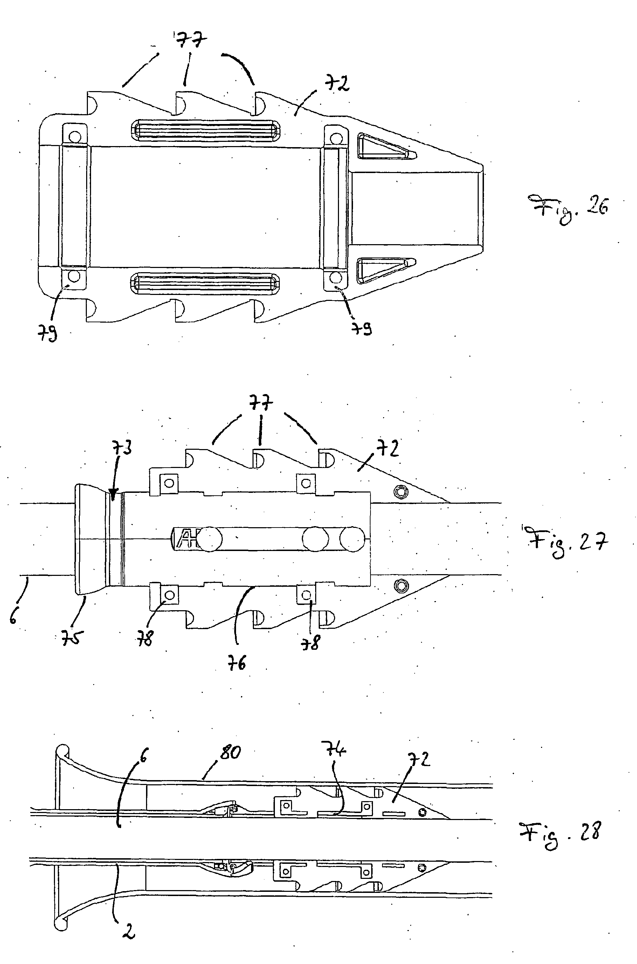

Es wird nun Bezug genommen auf die Figuren 25 bis 28. Diese zeigen eine Abdichtvorrichtung zur Abdichtung einer Röhrenöffnung einer zur Aufnahme des Endes des aus einer Anzahl von Rohrelementen gebildeten Rohrs vorgesehenen Aufnahmeröhre 80. Die Abdichtvorrichtung 70 weist im wesentlichen ein Rohrendstück 73 und ein Abdichtelement 71 auf, die jeweils aus zwei Teilen, nämlich aus zwei Rohrendstückhälften 74 bzw. aus zwei Abdichthälften 72 gebildet sind. Eine einzelne Abdichthälfte 72 ist näher in Fig. 26 gezeigt. Diese ist dazu ausgestaltet, das eine Ende 76 (siehe Fig. 27) des Rohrendstücks 73 aufzunehmen und festzuhalten. Dazu sind in der gezeigten Ausgestaltung des Abdichtelements in den Abdichthälften 72 zwei Nuten 78 vorgesehen, die komplementär ausgestaltet sind zu entsprechenden Flanschen 79 an der Außenseite der Rohrendstücke 74.

Das Rohrendstück 73 ist so ausgestaltet, dass das eine Ende 76 vollständig in das Innere des Abdichtelements 71 eingelegt und dort festgehalten wird. Das andere Ende 75 schaut dagegen aus dem hinteren Ende des Abdichtelements 71 heraus. Dieses herausschauende Ende 75 ist so ausgestaltet, dass es mit einem Standard-Rohrelement 4 verbunden werden kann, ist also als trichterförmiger oder kugelförmiger Abschnitt ausgebildet, der entsprechend in einem kugelförmigen Abschnitt des benachbarten Rohrelements aufgenommen werden kann bzw. der einen trichterförmigen Abschnitt des benachbarten Rohrelements im Innern aufnimmt. Eine derartige Verbindung mit einer Rohrhälfte 2 eines benachbarten Rohrelements ist in Fig. 28 erkennbar.

Das Abdichtelement selbst weist am Außenumfang mindestens eine Lamelle 77, in der gezeigten Ausführungsform drei Lamellen 77, auf, die entgegen der Einschubrichtung in die Aufnahmeröhre 80 abgewinkelt sind. Das Abdichtelement 71 bzw. zumindest die Lamellen 77 sind aus einem elastischen Material ausgebildet, beispielsweise Kunststoff oder Gummi, und weisen einen maximalen Außendurchmesser auf, der mindestens dem Innendurchmesser der Aufnahmeröhre 80 entspricht. Bevorzugt ist der Außendurchmesser der Lamellen 77 geringfügig größer als der Innendurchmesser der Aufnahmeröhre 80. Beim Einschieben der Abdichtvorrichtung 70 in die Aufnahmeröhre 80 werden die Lamellen 77 somit geringfügig zusammengepresst und bewirken quasi wie Widerhaken, dass das Rohr und die Abdichtvorrichtung 70 aus der Aufnahmeröhre 80 einfach wieder herausfallen oder durch geringe Zugkräfte herausgezogen werden können. Ferner wird durch die im wesentlichen rotationssymmetrische Ausgestaltung der Abdichtvorrichtung 70 eine Zentrierung des Rohrs innerhalb der Aufnahmeröhre 80 erreicht.

Die Anzahl und Ausgestaltung der Lamellen 77 kann natürlich gegenüber dem gezeigten Ausführungsbeispiel variieren. Wie gezeigt können die Lamellen 77 alle den gleichen Durchmesser aufweisen. Es ist jedoch auch möglich, Lamellen mit unterschiedlichen Durchmessern zu verwenden. Zur Verbindung zwischen dem Rohrendstück 73 und dem Abdichtelement 71 sind ferner geeignete Bohrungen in dem Abdichtelement 71 und durch die Flansche 79 des Rohrendstücks 73 vorgesehen, durch die Schrauben hindurchgeführt werden können, die mittels geeigneter Muttern eine Befestigung zwischen Rohrendstück 73 und Abdichtelement 71 bewirken. Selbstverständlich können aber auch andere Maßnahmen vorgesehen sein, um eine solche Befestigung zu bewirken.

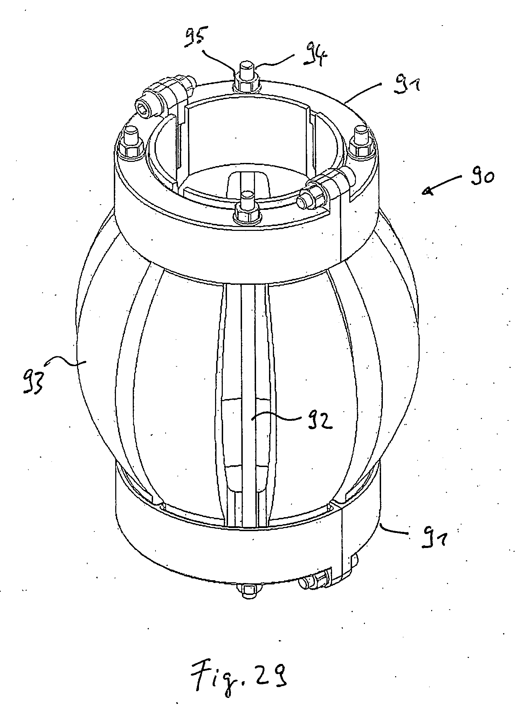

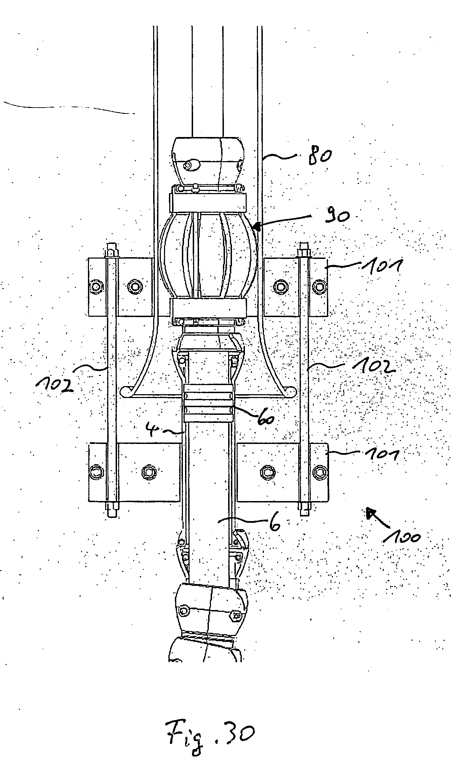

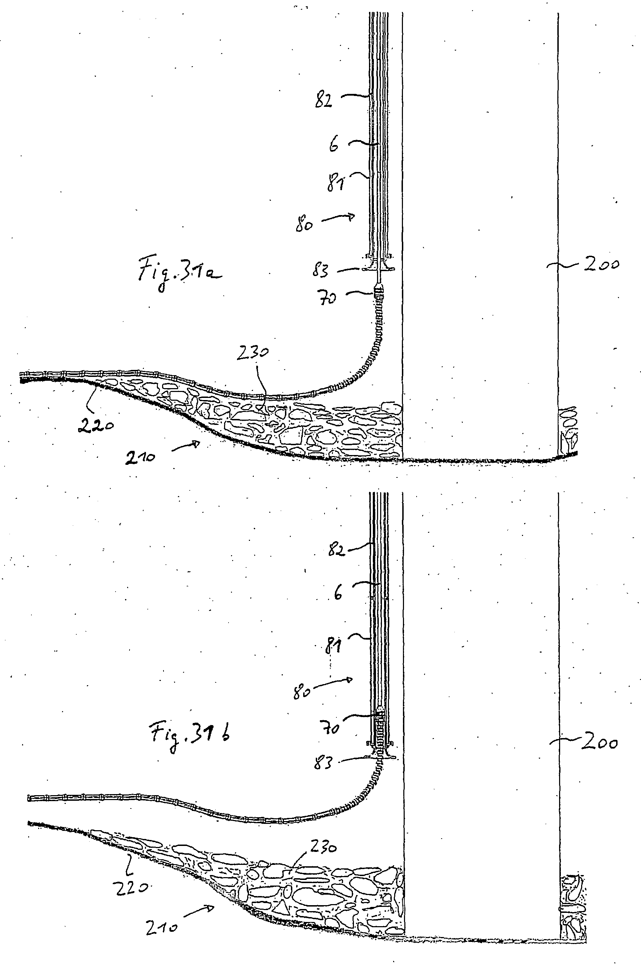

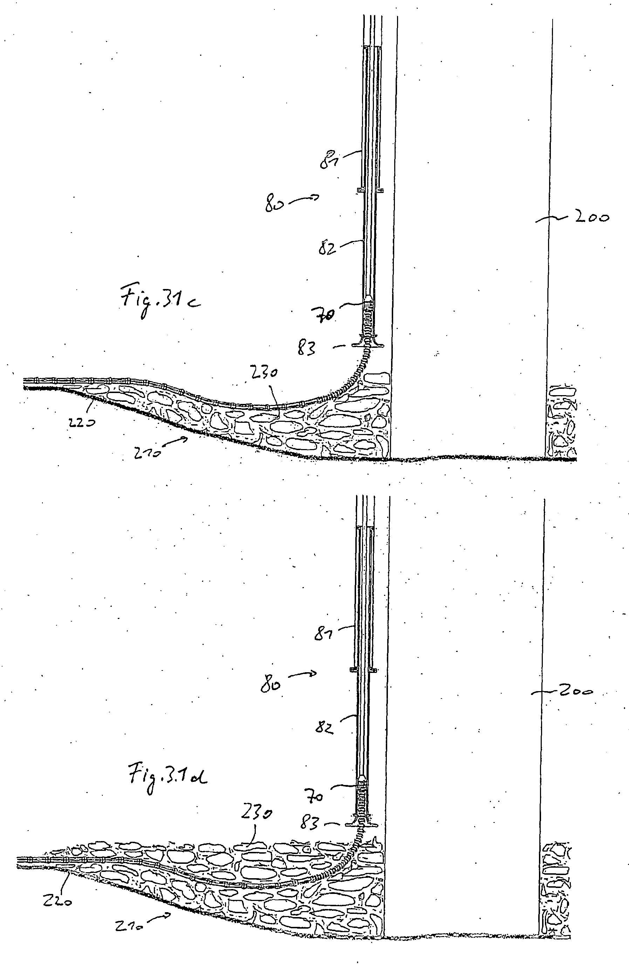

Es wird nun Bezug genommen auf die Figuren 29 und 30, in denen eine Zentriervorrichtung zur äußerlichen. Abringung an einem Rohrelement zur Zentrierung und Klemmung des Endes des aus einer Anzahl von Rohrelementen gebildeten Rohrs in einer zur Aufnahme des Rohrs des Rohrs vorgesehenen Aufnahmeröhre 80 gezeigt ist. Diese Zentriervorrichtung 90 weist, wie insbesondere in Fig. 29 gezeigt ist, zwei Ringklemmen 91 auf, die an gegenüberliegenden Enden der Zentriervorrichtung 90 angeordnet sind. Diese Ringklemmen 91 weisen einen Außendurchmesser auf, der maximal dem Innendurchmesser der Aufnahmeröhre 80 entspricht, bevorzugt etwas kleiner ist als der Innendurchmesser der Aufnahmeröhre 80.

Die beiden Ringklemmen 91 sind mittels Abstandseinstellelementen 92 fest miteinander verbunden. Dies sind beispielsweise einfache Metallstangen oder Gewindebolzen, die durch entsprechende Bohrungen in den Ringklemmen 91 durchgeführt sind und an wenigstens einem Ende ein Gewinde 94 aufweisen, auf das eine entsprechende Mutter 95 aufgeschraubt werden kann.

Zwischen den Ringklemmen 91 sind ferner mehrere biegsame, leicht nach außen gewölbte Lamellen 93 vorgesehen, die aus einem flexiblen Material, beispielsweise Kunststoff oder Kevlar, bestehen. Diese sind so ausgestaltet, dass sie beim Verringern des Abstandes zwischen den beiden Ringklemmen 91 sich noch weiter nach außen wölben, so dass sich der maximale Außendurchmesser der Zentriervorrichtung 90 vergrößert. Eine Verringerung des Abstandes zwischen den Ringklemmen 91 kann bei der gezeigten Ausgestaltung insbesondere dadurch erreicht werden, dass die Muttern 95 weiter auf die Gewindebolzen 92 aufgeschraubt werden.

Wie in Fig. 30 gezeigt ist, liegen die Lamellen 93 in montiertem Zustand an der inneren Oberfläche der Aufnahmeröhre 80 eng an und bewirken somit eine Klemmung in der Aufnahmeröhre 80. Gleichzeitig wird auch eine Zentrierung innerhalb der Aufnahmeröhre 80 erreicht. Die Stärke der Klemmung kann dabei erhöht werden, indem der Abstand zwischen den Ringklemmen 21 erhöht wird, so dass sich die Lamellen 93 möglichst weit nach außen wölben bzw. mit einer höheren Druckkraft gegen die innere Oberfläche der Aufnahmeröhre 80 gepresst werden.

Um das aus den Rohrelementen 4 bestehende Rohr mit der Aufnahmeröhre 80 zu verbinden, ist ferner bei der in Fig. 30 gezeigten Ausgestaltung eine Halteeinrichtung 100 vorgesehen, die zwei quer zur Längsrichtung des Rohrs und der Aufnahmeröhre 80 liegende Halteelemente 101 und zwei die Halteelemente 101 verbindende Haltebolzen 102 aufweist. Dadurch kann das Rohr und die Aufnahmeröhre 80 außen liegend fest miteinander verbunden werden, so dass durch diese zusätzliche Maßnahme verhindert wird, dass das Rohr bzw. das Kabel oder die Rohrleitung 6 aus der Aufnahmeröhre 80 herausrutscht oder ungewollt herausgezogen wird. Ferner wird dadurch erneut eine Zentrierung des Rohrs in Bezug auf die Aufnahmeröhre 80 erzielt.

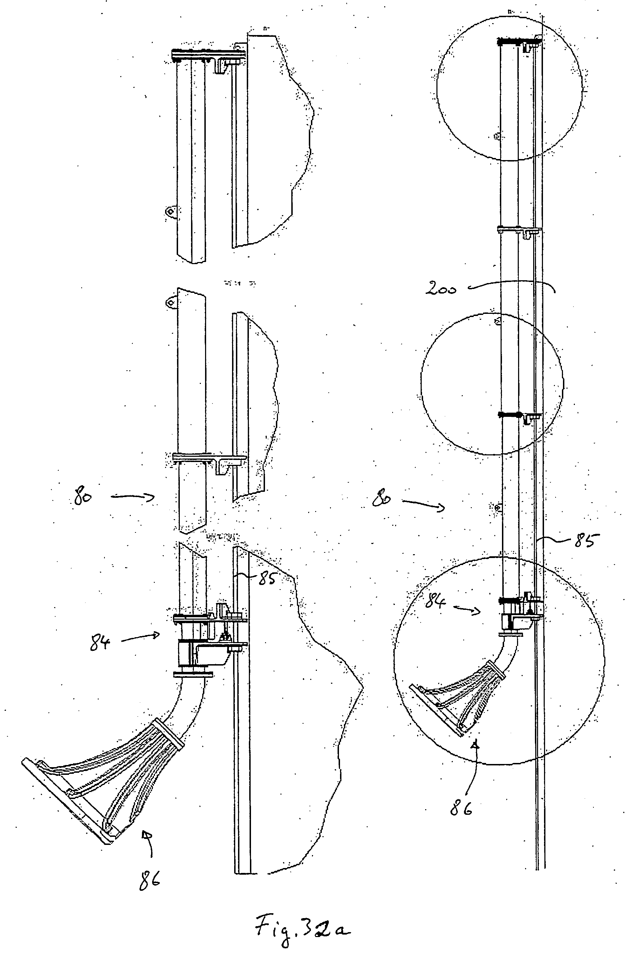

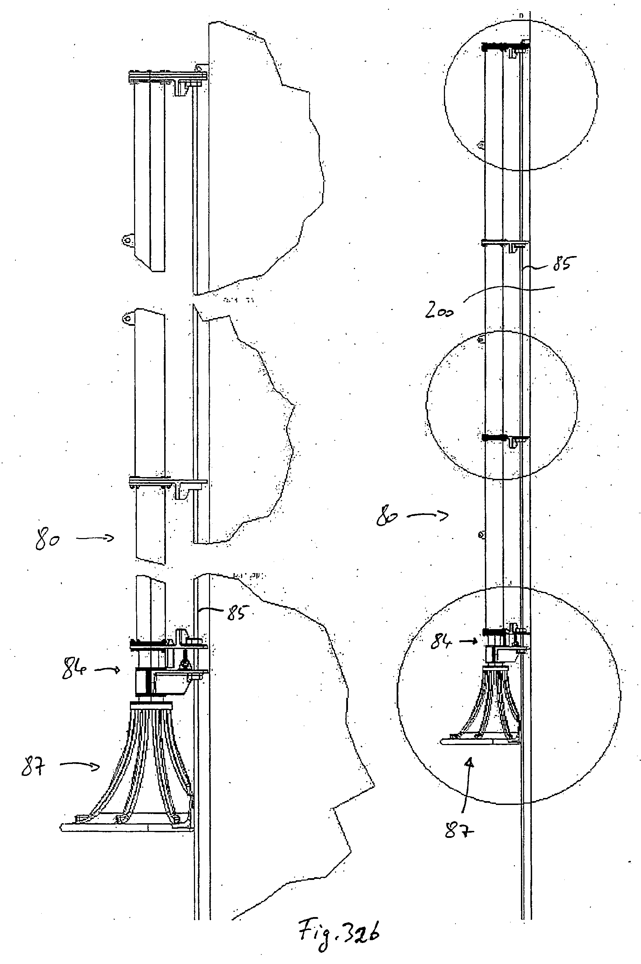

Fig. 31 zeigt eine vorteilhafte Ausgestaltung einer Aufnahmeröhre 80 sowie deren Anwendung. Die Aufnahmeröhre 80 weist eine äußere Röhre 81 und eine innere, in der äußeren Röhre 81 verschiebbare Röhre 82 auf. An dem Ende des aus einer Anzahl von Rohrelementen 4 gebildeten Rohrs ist bei der gezeigten Ausgestaltung eine oben beschriebenen Abdichtvorrichtung 70 angebracht. In der in Fig. 31 a gezeigten Ausgangsposition ist die innere Röhre 82 in die äußere Röhre 81 nahezu vollständig eingeschoben und das Ende des Rohre mit der Abdichtvorrichtung 70 schaut noch aus der Aufnahmeröhre 80 heraus, während das Kabel 6 bereits durch die Aufnahmeröhre 80 gezogen ist.

Die Aufnahmeröhre 80 ist meist parallel und neben dem in den Meeresboden 220 gerammten Sockel 200, beispielsweise einer Ölplattform oder einer Off-Shore-Windenergieanlage, starr angeordnet. Häufig treten jedoch rund um den Befestigungspunkt des in den Meeresboden 220 gerammten Sockels 200 muldenartige Vertiefungen 210 im Meeresboden 220 auf, die bis zu mehreren Metern tief sein können. Dadurch kommt es vor, dass, wie in Fig. 31b gezeigt ist, nach dem Einziehen des Rohrendes mit der Abdichtvorrichtung 70 in die innere Röhre 82 ein Teil des Rohrs nicht mehr auf dem Meeresboden 220 aufliegt, sondern über der Vertiefung 220 schwebt. Dies kann im Laufe der Zeit jedoch zu Beschädigungen des Rohrs und des Kabels 6 führen.

Mit der erfindungsgemäßen Aufnahmeröhre 80 ist es jedoch möglich, wie in Fig. 31 c gezeigt ist, die innere Röhre 82 zusammen mit dem darin fixierten Rohrende aus der äußeren Röhre 81 in Richtung des Meeresbodens 220 herauszufahren, bis der größte Teil des Rohrendes wieder auf dem Meeresboden 220 bzw. auf im Bereich der Vertiefung aufgeschüttetem Material 230, z.B. Steinen, aufliegt. Zum Herausfahren der inneren Röhre 82 aus der äußeren Röhre 81 sind geeignete (nicht gezeigte) Ausfahrmittel vorgesehen, beispielsweise eine am Endflansch 83 der inneren Röhre angebrachte Führungsstange oder ein Führungsseil.

In dieser Endposition wird schließlich, wie in Fig. 31 d gezeigt ist, bevorzugt noch über und unter dem Rohrende weiteres Material 230 aufgeschüttet zur Stabilisierung des Rohrendes.

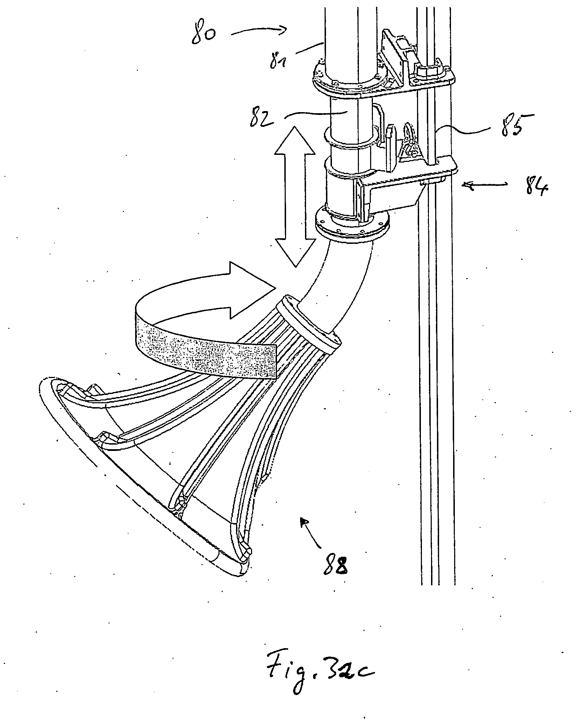

Fig. 32 zeigt verschiedene Ausgestaltungen von Aufnahmeröhren 80, die bevorzugt eingesetzt werden können. In den Fig. 32a und 32b sind typische J- bzw. I-förmige Ausgestaltungen gezeigt, die mit einer T-förmigen Führung 84 zum Verschieben auf einer Führungsschiene 85 ausgestaltet sind, die wiederum an dem Sockel 200 angebracht ist. Am unteren Ende sind eine J-förmige Eintrittsöffnung 86 bzw. eine l-förmige Eintrittsöffnung 87 vorgesehen zum Einführen des Rohrs wie in Fig. 31 gezeigt. Fig. 32c zeigt eine Ausgestaltung mit einer J-förmigen Eintrittsöffnung 88, die rotierbar ist und eine Metall- oder Polyurethan-Ausgestaltung einsetzt zur Befestigung der Eintrittsöffnung 88 an der inneren Röhre 82.

Die oben beschriebenen Zusatzelemente, wie die Zwischenelemente, die Klemmvorrichtung, die Abdichtvorrichtung, die Zentriervorrichtung und die Aufnahmeröhre werden bevorzugt bei der erfindungsgemäßen Schutzvorrichtung eingesetzt. Es ist jedoch durchaus möglich, diese Zusatzelemente auch separat und bei anderen Schutzvorrichtungen und in Verbindung mit Rohrelementen anderer Art zu verwenden.

## Patentansprüche

1. Schutzvorrichtung für Kabel und Rohrleitungen, insbesondere für Seekabel, mit einer Mehrzahl von Rohrhälften (2), von denen jeweils zwei zusammengefügte Rohrhälften (2) ein Rohrelement (4) bilden und in Reihe miteinander verbundene Rohrelemente (4) ein Rohr zur Aufnahme eines Kabels oder einer Rohrleitung (6) bilden, wobei die Rohrelemente (4) jeweils an einem ersten Ende einen kugelförmigen Abschnitt (8) und an einem zweiten, dem ersten Ende gegenüberliegenden Ende einen trichterförmigen Abschnitt (10) aufweisen, der im Inneren des kugelförmigen Abschnitts (8) eines benachbarten Rohrelements (4) aufgenommen und festgehalten ist,
**dadurch gekennzeichnet, dass** die ein Rohrelement (4) bildenden Rohrhälften (2) durch miteinander in Eingriff stehende Bereiche (14, 16) des kugelförmigen Abschnitts (8) verbunden sind, wobei das Rohrelement (4) außen frei von scharfen Kanten und hervorstehenden Ecken oder Kanten ist.

2. Schutzvorrichtung nach Anspruch 1,
**dadurch gekennzeichnet, dass** die in Eingriff stehenden Bereiche als Einschnitte (14) in den kugelförmigen Abschnitt (8) und als Verlängerungen (16) der kugelförmigen Abschnitte (8) ausgebildet sind.

3. Schutzvorrichtung nach einem der vorstehenden Ansprüche,
**dadurch gekennzeichnet, dass** die Rohrhälften (2) an dem kugelförmigen Abschnitt (8) jeweils einen Einschnitt (14) und eine Verlängerung (16) aufweisen.

4. Schutzvorrichtung nach Anspruch 3,
**dadurch gekennzeichnet, dass** der Einschnitt (14) und die Verlängerung (16) einer ersten Rohrhälfte (2) mit dem Einschnitt (14) und der Verlängerung (16) einer zweiten Rohrhälfte (2) durch eine Schwenkbewegung der beiden Rohrhälften (2) zueinander werkzeuglos miteinander in Eingriff gebracht werden können.

5. Schutzvorrichtung nach einem der vorstehenden Ansprüche,
**dadurch gekennzeichnet, dass** am trichterförmigen Abschnitt (10) an der Innenseite der Rohrhälften (2) Befestigungsmittel vorgesehen sind.

6. Schutzvorrichtung nach einem der vorstehenden Ansprüche,
**dadurch gekennzeichnet, dass** am kugelförmigen Abschnitt (8) durch ein Rohrelement (4) verlaufende Verschraubungslöcher (24) vorgesehen sind.

7. Schutzvorrichtung nach Anspruch 6,
**dadurch gekennzeichnet, dass** die Verschraubungslöcher (24) so ausgebildet sind, dass Schrauben (26) und Muttern (28) in den Verschraubungslöchern (24) versenkt werden können.

8. Schutzvorrichtung nach Anspruch 6 oder 7,
**dadurch gekennzeichnet, dass** die Verschraubungslöcher (24) auf einer Seite eines Rohrelements (4) eine eingesetzte Mutter (28) drehfest festhalten.

9. Schutzvorrichtung nach einem der vorstehenden Ansprüche,
**dadurch gekennzeichnet, dass** die ein Rohr bildenden Rohrelemente (4) sich gegeneinander soweit verschwenken lassen, dass der Mindestbiegeradius eines im Rohrelement (4) befindlichen Kabels (6) oder einer Rohrleitung nicht unterschritten wird.

10. Schutzvorrichtung nach einem der vorstehenden Ansprüche,
**dadurch gekennzeichnet, dass** die Rohrhälften (2) aus duktilem Eisen (Sphäroguss) oder anderen geeigneten, insbesondere seewassergeeigneten Materialien gefertigt sind.

11. Schutzvorrichtung nach einem der vorstehenden Ansprüche,
**dadurch gekennzeichnet, dass** an der innen liegenden Oberfläche des kugelförmigen Abschnitts (8) eine Randbegrenzung (30) zur Biegungsbegrenzung angeordnet ist.

12. Schutzvorrichtung nach einem der vorstehenden Ansprüche,
**dadurch gekennzeichnet, dass** die Rohrelemente (4) so ausgestaltet sind, dass durch die Wahl der Länge der Rohrelemente (4) der maximale Biegeradius des Rohr einstellbar ist.

13. Schutzvorrichtung nach einem der vorstehenden Ansprüche,
**gekennzeichnet durch** ein erstes Zwischenelement (40) zur Verbindung zweier, sich mit dem jeweiligen kugelförmigen Abschnitt (8) gegenüber liegenden Rohrelemente (4), wobei das erste Zwischenelement (40) aus zwei identischen Zwischenelementhälften (42) gebildet ist und an beiden Enden einen trichterförmigen Abschnitt (44) aufweist, der im Inneren des kugelförmigen Abschnitts (8) des benachbarten der zwei sich gegenüber liegenden Rohrelemente (4) aufgenommen und festgehalten wird.

14. Schutzvorrichtung nach einem der vorstehenden Ansprüche,
**gekennzeichnet durch** ein zweites Zwischenelement (50) zur Verbindung zweier, sich mit dem jeweiligen trichterförmigen Abschnitt (10) gegenüber liegenden Rohrelemente (4), wobei das zweite Zwischenelement (50) aus zwei identischen Zwischenelementhälften (52) gebildet ist und an beiden Enden einen Endabschnitt (54) aufweist, der den trichterförmigen Abschnitt (10) des benachbarten der zwei sich gegenüber liegenden Rohrelemente (4) im Inneren aufnimmt und festhält.

15. Schutzvorrichtung nach einem der vorstehenden Ansprüche,
**gekennzeichnet durch** eine Klemmvorrichtung (60) zur Klemmung eines Kabels oder einer Rohrleitung (6) innerhalb eines Rohrelements (4), wobei die Klemmvorrichtung (60) ringförmig und nach außen biegsam ausgestaltet ist, einen dem Innendurchmesser des Rohrelements (4) angepassten Außendurchmesser, an der äußeren Oberfläche wenigstens eine ringförmig verlaufende Nut (64) und einen konisch verlaufenden Innendurchmesser aufweist, wobei der Innendurchmesser an der engsten Stelle (66) geringer ist als der Außendurchmesser des zu klemmenden Kabels bzw. der zu klemmenden Rohrleitung (6).

16. Schutzvorrichtung nach Anspruch 15,
**dadurch gekennzeichnet, dass** das Rohrelement (4) zur Aufnahme der Klemmvorrichtung (60) einen Aufnahmebereich (68) mit vergrößertem Innendurchmesser aufweist.

17. Schutzvorrichtung nach Anspruch 15 oder 16,
**dadurch gekennzeichnet, dass** die Klemmvorrichtung (60) mindestens zwei zusammen steckbare oder klemmbare Klemmvorrichtungselemente (61, 62) aufweist.

18. Schutzvorrichtung nach Anspruch 15, 16 oder 17,
**dadurch gekennzeichnet, dass** die Klemmvorrichtung (60) wenigstens zwei ringförmig verlaufende Nuten (64) aufweist und dass die engste Stelle (66) mit dem geringsten Innendurchmesser zwischen den wenigstens zwei Nuten (64) liegt.

19. Schutzvorrichtung nach einem der vorstehenden Ansprüche,
**gekennzeichnet durch** eine Abdichtvorrichtung (70) zur Abdichtung einer Röhrenöffnung einer zur Aufnahme des Endes des aus einer Anzahl von Rohrelementen (4) gebildeten Rohrs vorgesehenen Aufnahmeröhre (80) mit:
- einem zwei Rohrendstückhälften (74) aufweisenden Rohrendstück (73), welches an dem dem Rohr zuweisenden ersten Ende einen kugelförmigen oder trichterförmigen Abschnitt (75) aufweist, der mit dem trichterförmigen bzw. kugelförmigen Abschnitt des benachbarten letzten Rohrelements (4) des Rohrs verbunden ist, und
- einem zwei Abdichthälften (72) aufweisenden Abdichtelement (71), welches das zweite, dem ersten Ende (75) gegenüber liegenden Ende (76) des Rohrendstücks aufnimmt und festhält und wenigstens eine außen angeordnete, biegsame Lamelle (77) aufweist, deren maximaler Außendurchmesser mindestens dem Innendurchmesser der Aufnahmeröhre (80) entspricht.

20. Schutzvorrichtung nach Anspruch 19,
**dadurch gekennzeichnet, dass** die Abdichthälfte (72) mehrere in Richtung des ersten Endes (75) des Rohrendstücks (73) weisende Lamellen (77) aufweist.

21. Schutzvorrichtung nach Anspruch 19 oder 20,
**dadurch gekennzeichnet, dass** das Rohrendstück (74) an der Außenseite mindestens einen Flansch (79) und das Abdichtelement (71) an der Innenseite mindestens eine komplementäre Nut (79) zur Aufnahme des Flansches (78) und zur festen Verbindung von Rohrendstück (74) und Abdichtelement (71) aufweist.

22. Schutzvorrichtung nach einem der vorstehenden Ansprüche,
**gekennzeichnet durch** eine Zentriervorrichtung (90) zur äußerlichen Anbringung an einem Rohrelement zur Zentrierung und Klemmung des Endes des aus einer Anzahl von Rohrelementen (4) gebildeten Rohrs in einer zur Aufnahme des Rohrs vorgesehenen Aufnahmeröhre (80) mit:
- zwei an den gegenüber liegenden Enden der Zentriervorrichtung (90) angeordneten Ringklemmen (91) mit einem dem Außendurchmesser des zu zentrierenden Rohrelements (4) angepassten Innendurchmesser,
- mehreren an den zwei Ringklemmen (91) angeordneten Abstandseinstellelemente (92) zum Verstellen des Abstands zwischen den Ringklemmen (91), und
- mehreren zwischen den zwei Ringklemmen (91) angeordneten, biegsamen, beim Verringern des Abstands zwischen den Ringklemmen (91) sich nach außen wölbenden Lamellen (93).

23. Schutzvorrichtung nach Anspruch 22,
**dadurch gekennzeichnet, dass** als Abstandseinstellelemente (92) mehrere, durch die Ringklemmen (91) hindurch führende Gewindebolzen vorgesehen sind, die an mindestens einem Ende ein Gewinde (94) aufweisen, so dass mittels einer auf das Gewinde (94) aufgeschraubten Mutter (95) der Abstand zwischen den Ringklemmen (91) verringerbar ist.

24. Schutzvorrichtung nach einem der vorstehenden Ansprüche,
**gekennzeichnet durch** eine Aufnahmeröhre (80) zur Aufnahme des Endes des aus einer Anzahl von Rohrelementen (4) gebildeten Rohrs, wobei die Aufnahmeröhre (80) eine äußere Röhre (81) und eine innere, in der äußeren Röhre verschiebbare Röhre (82) aufweist.

25. Rohrhälfte für eine Schutzvorrichtung nach einem der Ansprüche 1 bis 24, für Kabel und Rohrleitungen, insbesondere für Seekabel, mit einem halbkugelförmigen Abschnitt (12) an einem ersten Ende und einer Trichterhälfte (14) an einem zweiten, dem ersten Ende gegenüberliegenden Ende, wobei zwei zusammengefügte Rohrhälften (2) ein Rohrelement (4) bilden, das jeweils an einem ersten Ende einen kugelförmigen Abschnitt (8) und an einem zweiten, dem ersten Ende gegenüberliegenden Ende einen trichterförmigen Abschnitt (10) aufweist, der im Inneren des kugelförmigen Abschnitts (8) eines benachbarten Rohrelements (4) aufgenommen und festgehalten werden kann, wobei in Reihe miteinander verbundene Rohrelemente (4) ein Rohr zur Aufnahme eines Kabels (6) oder einer Rohrleitung bilden,
**dadurch gekennzeichnet, dass** Einschnitte (14) in den halbkugelförmigen Abschnitt (12) eingebracht und Verlängerungen (16) am halbkugelförmigen Abschnitt (12) angeordnet sind, welche bei Verbindung zweier Rohrhälften (2) zur Bildung eines Rohrelements (4) miteinander in Eingriff stehen, wobei das Rohrelement (4) außen frei von scharfen Kanten und hervorstehenden Ecken oder Kanten ist.

## Claims

1. Protective device for cables and conduits, in particular for marine cables, having a plurality of pipe halves (2) of which two pipe halves (2) joined together in each case form a pipe element (4) and pipe elements (4) joined to one another in series form a pipe for accommodating a cable or a conduit (6), wherein the pipe elements (4) each have at a first end a ball-shaped section (8) and at a second end opposite the first end a funnel-shaped section (10) which is accommodated and held in place in the interior of the ball-shaped section (8) of a neighbouring pipe element (4), **characterised in that** the pipe halves (2) forming a pipe element (4) are joined by regions (14, 16) in engagement with one another in the ball-shaped section (8), wherein on the outside the pipe element (4) is free of sharp edges and projecting corners or edges.

2. Protective device according to claim 4, **characterised in that** the regions in engagement are constructed as incisions (14) cut into the ball-shaped section (8) and as extensions (16) of the ball-shaped section (8).

3. Protective device according to any of the preceding claims, **characterised in that** the pipe halves (2) each have an incision (14) and an extension (16) on the ball-shaped section (8).

4. Protective device according to claim 3, **characterised in that** the incision (14) and the extension (16) of a first pipe half (2) together with the incision (14) and the extension (16) of a second pipe half (2) can be brought into engagement with one another without use of a tool by a pivot movement of the two pipe halves (2) relative to one another.

5. Protective device according to any of the preceding claims, **characterised in that** fastening means are provided on the inside of the pipe halves (2) on the funnel-shaped section (10).

6. Protective device according to any of the preceding claims, **characterised in that** bolting holes (24) running through a pipe element (4) are provided on the ball-shaped section (8).

7. Protective device according to claim 6, **characterised in that** the bolting holes (24) are constructed in such a way that bolts (26) and nuts (28) can be countersunk in the bolting holes (24).

8. Protective device according to claim 6 or 7, **characterised in that** the bolting holes (24) on one side of a pipe element (4) hold an inserted nut (28) in place in a manner fixed to rotation.

9. Protective device according to any of the preceding claims, **characterised in that** the pipe elements (4) forming a pipe can be pivoted relative to one another so far that the bending does not fall below the minimum bending radius of a cable (6) or a conduit located in the pipe element (4).

10. Protective device according to any of the preceding claims, **characterised in that** the pipe halves (2) are manufactured from ductile iron (spheroidal graphite iron) or other suitable materials, suitable in particular for seawater.

11. Protective device according to any of the preceding claims, **characterised in that** arranged on the inner surface of the ball-shaped section (8) is a peripheral limiter (30) for limiting bending.

12. Protective device according to any of the preceding claims, **characterised in that** the pipe elements (4) are designed in such a way that by selecting the length of the pipe elements (4) the maximum bending radius of the pipe can be set.

13. Protective device according to any of the preceding claims, **characterised by** a first intermediate element (40) for connecting two pipe elements (4) located opposite one another to the respective ball-shaped section (8), wherein the first intermediate element (40) is formed from two identical intermediate element halves (42) and at both ends possesses a funnel-shaped section (44) which is accommodated and held in place in the interior of the ball-shaped section (8) of one of the two neighbouring pipe elements (4) located opposite one another.

14. Protective device according to any of the preceding claims, **characterised by** a second intermediate element (50) for connecting two pipe elements (4) located opposite one another to the respective funnel-shaped section (10), wherein the second intermediate element (50) is formed from two identical intermediate element halves (52) and at both ends possesses an end section (54) which accommodates and holds in place in the interior the funnel-shaped section (10) of one of the two neighbouring pipe elements (4) located opposite one another.

15. Protective device according to any of the preceding claims, **characterised by** a clamping device (60) for clamping a cable or a conduit (6) inside a pipe element (4), wherein the clamping device (60) is designed in the shape of a ring to be pliable towards the outside and has an external diameter adapted to the internal diameter of the pipe element (4), at least one groove (64) running annularly on the outer surface and a conically extending internal diameter, wherein the internal diameter at the narrowest point (66) is less than the external diameter of the cable to be clamped or of the conduit (6) to be clamped.

16. Protective device according to claim 15, **characterised in that** for accommodating the clamping device (60) the pipe element (4) possesses a receiving region (68) having an enlarged internal diameter.

17. Protective device according to claim 15 or 16, **characterised in that** the clamping device (60) possesses at least two clamping device elements (61, 62) which can be plugged or clamped together.

18. Protective device according to claim 15, 16 or 17, **characterised in that** the clamping device (60) possesses at least two grooves (64) running annularly and that the narrowest point (68) having the smallest internal diameter is located between the at least two grooves (64).

19. Protective device according to any of the preceding claims, **characterised by** a sealing device (70) for sealing a pipe opening of a receiving pipe (80) provided for receiving the end of the pipe formed from a number of pipe elements (4) having:
- a pipe end piece (73) comprising two pipe end piece halves (74) and possessing at the first end pointing towards the pipe a ball-shaped or funnel-shaped section (75) which is joined to the funnel-shaped or ball-shaped section of the adjacent last pipe element (4) of the pipe; and
- a sealing element (71) comprising two sealing halves (72) which accommodates and holds in place the second end (76) of the pipe end piece located opposite the first end (75) and has at least one externally arranged, pliable lamella (77) whose maximum external diameter coincides at least with the internal diameter of the receiving pipe (80).

20. Protective device according to claim 19, **characterised in that** the sealing half (72) comprises a plurality of lamellae pointing in the direction of the first end (75) of the pipe end piece (73).

21. Protective device according to claim 19 or 20, **characterised in that** the pipe end piece (74) has on the outside at least one flange (79) and the sealing element (71) has on the inside at least one complementary groove (79) for accommodating the flange (78) and for the firm connection of the pipe end piece (74) and sealing element (71).

22. Protective device according to any of the preceding claims, **characterised by** a centring device (90) for external attachment to a pipe element for centring and clamping the end of the pipe formed from a number of pipe elements (4) in a receiving pipe (80) provided for receiving the pipe having:
- two annular clamps (91) arranged at opposite ends of the centring device (90) having an internal diameter adapted to the external diameter of the pipe element (4) to be centred;
- a plurality of spacing setting elements (92) arranged on the two annular clamps (91) for adjusting the spacing between the annular clamps (91); and
- a plurality of pliable lamellae (93) arranged between the two annular clamps which arch outwardly on reducing the spacing between the annular clamps (91).

23. Protective device according to claim 22, **characterised in that** for the spacing setting elements (92) a plurality of threaded bolts passing through the annular clamps (91) is provided which have at one end at least a thread (94) so that by means of a nut (95) screwed onto the thread (94) the spacing between the annular clamps (91) is reducible.

24. Protective device according to any of the preceding claims, **characterised by** a receiving pipe (80) for receiving the end of the pipe formed from a number of pipe elements (4), wherein the receiving pipe (80) comprises an outer pipe (81) and an inner pipe (82) which is displaceable in the outer pipe.

25. Pipe half for a protective device according to any of claims 1 to 24 for cables and conduits, in particular for marine cables, having a hemispherical section (12) on a first end and a funnel half (14) on a second end opposite the first end, wherein two pipe halves (2) joined together form a pipe element (4) each of which has at a first end a ball-shaped section (8) and at a second end opposite the first end a funnel-shaped section (10) which can be accommodated and held in place in the interior of the ball-shaped section (8) of a neighbouring pipe element (4), wherein a series of pipe elements (4) joined to one another in a row form a pipe for accommodating a cable (6) or a conduit, **characterised in that** incisions (14) are cut into the hemispherical section (12) and extensions (16) are arranged on the hemispherical section (12) which when joining two pipe halves (2) to form a pipe element (4) come into engagement with one another, wherein the pipe element (4) is free on the outside from sharp edges and projecting corners or edges.

## Revendications

1. Dispositif de protection pour câbles et tuyauteries, en particulier pour câbles marins, comportant chacun une pluralité de moitiés de tube (2) dont deux moitiés de tube assemblées forment un élément tubulaire (4) et des éléments tubulaires (4), reliés en série les uns aux autres, forment un tube pour recevoir un câble ou une tuyauterie (6), les éléments tubulaires (4) comportant chacun à une première extrémité un segment (8) de forme sphérique et à une seconde extrémité, opposée à la première, un segment (10) en forme d'entonnoir qui est reçu et fixé à l'intérieur du segment (8) de forme sphérique d'un élément tubulaire (4) voisin,
**caractérisé en ce que** les moitiés de tube (2) formant un élément tubulaire (4) sont reliées par des zones (14, 16) du segment (8) de forme sphérique en prise les unes avec les autres, l'élément tubulaire (4) ne présentant sur l'extérieur ni arêtes vives ni angles ou arêtes saillants.

2. Dispositif de protection selon la revendication 1,
**caractérisé en ce que** les zones en prise sont réalisées sous la forme d'entailles (14) dans le segment (8) de forme sphérique et sous la forme de prolongements (16) des segments (8) de forme sphérique.

3. Dispositif de protection selon l'une des revendications précédentes,
**caractérisé en ce que** les moitiés de tube (2) présentent chacune sur le segment (8) de forme sphérique une entaille (14) et un prolongement (16).

4. Dispositif de protection selon la revendication 3,
**caractérisé en ce que** l'entaille (14) et le prolongement (16) d'une première moitié de tube (2) peuvent être amenés en prise sans outil avec l'entaille (14) et le prolongement (16) d'une deuxième moitié de tube (2), par un mouvement de pivotement des deux moitiés de tube (2) l'une par rapport à l'autre.

5. Dispositif de protection selon l'une des revendications précédentes,
**caractérisé en ce que** sur le segment (10) en forme d'entonnoir, sur le côté intérieur des moitiés de tube (2), sont prévus des moyens de fixation.

6. Dispositif de protection selon l'une des revendications précédentes,
**caractérisé en ce que** sur le segment (8) de forme sphérique sont prévus des trous de vissage (24) s'étendant à travers un élément tubulaire (4).

7. Dispositif de protection selon la revendication 6,
**caractérisé en ce que** les trous de vissage (24) sont réalisés de manière que des vis (26) et des écrous (28) puissent être encastrés dans les trous de vissage (24).

8. Dispositif de protection selon la revendication 6 ou 7,
**caractérisé en ce que** les trous de vissage (24) fixent solidement en rotation un écrou (28) inséré, sur un côté d'un élément tubulaire (4).

9. Dispositif de protection selon l'une des revendications précédentes,
**caractérisé en ce que** les éléments tubulaires (4) formant un tube peuvent être pivotés l'un par rapport à l'autre tant que le rayon minimal de flexion d'un câble (6) se trouvant dans l'élément tubulaire (4) ou d'une tuyauterie n'est pas dépassé par valeur inférieure.

10. Dispositif de protection selon l'une des revendications précédentes,
**caractérisé en ce que** les moitiés de tube (2) sont fabriquées dans un fer ductile (fonte sphéroïdale) ou dans d'autres matériaux appropriés, en particulier convenant à l'eau de mer.

11. Dispositif de protection selon l'une des revendications précédentes,
**caractérisé en ce que** sur la surface située à l'intérieur du segment (8) de forme sphérique est disposée une délimitation de bordure (30) pour limiter la flexion.

12. Dispositif de protection selon l'une des revendications précédentes,
**caractérisé en ce que** les éléments tubulaires (4) sont conçus de manière que par le choix de la longueur des éléments tubulaires (4) on puisse régler le rayon de flexion maximal du tube.

13. Dispositif de protection selon l'une des revendications précédentes,
**caractérisé par** un premier élément intermédiaire (40) pour la liaison de deux éléments tubulaires (4) ayant leur segment (8) de forme sphérique respectif en vis-à-vis, le premier élément intermédiaire (40) étant formé de deux moitiés d'élément intermédiaire (42) identiques et présentant, aux deux extrémités, un segment (44) en forme d'entonnoir qui est reçu et fixé à l'intérieur du segment (8) de forme sphérique de l'élément tubulaire (4) voisin des deux éléments tubulaires (4) se faisant face.

14. Dispositif de protection selon l'une des revendications précédentes,
**caractérisé par** un second élément intermédiaire (50) pour la liaison de deux éléments tubulaires (4) ayant leur segment (10) en forme d'entonnoir en vis-à-vis, le second élément intermédiaire (50) étant formé de deux moitiés d'élément intermédiaire (52) identiques et présentant, aux deux extrémités, un segment terminal (54), qui reçoit à l'intérieur et fixe le segment (10) en forme d'entonnoir de l'élément tubulaire (4) voisin des deux éléments tubulaires (4) se faisant face.

15. Dispositif de protection selon l'une des revendications précédentes,
**caractérisé par** un dispositif de serrage (60) pour le serrage d'un câble ou d'une tuyauterie (6) à l'intérieur d'un élément tubulaire (4), le dispositif de serrage (60) de forme annulaire et flexible vers l'extérieur, présentant un diamètre extérieur adapté au diamètre intérieur de l'élément tubulaire (4), au moins une rainure (64) s'étendant en forme d'anneau sur la surface extérieure et un diamètre intérieur s'étendant coniquement, le diamètre intérieur au point (66) le plus étroit étant inférieur au diamètre extérieur du câble à serrer ou de la tuyauterie (6) à serrer.

16. Dispositif de protection selon la revendication 15,
**caractérisé en ce que** l'élément tubulaire (4) présente, pour recevoir le dispositif de serrage (60), une zone de réception (68) avec diamètre intérieur agrandi.

17. Dispositif de protection selon la revendication 15 ou 16,
**caractérisé en ce que** le dispositif de serrage (60) comporte au moins deux éléments de dispositif de serrage (61, 62) pouvant être assemblés par enfichage ou pouvant être serrés.

18. Dispositif de protection selon la revendication 15, 16 ou 17,
**caractérisé en ce que** le dispositif de serrage (60) présente au moins deux rainures (64) s'étendant en forme d'anneau, et **en ce que** le point (66) le plus étroit avec le diamètre intérieur le plus faible se situe entre les au moins deux rainures (64).

19. Dispositif de protection selon l'une des revendications précédentes,
**caractérisé par** un dispositif d'étanchéité (70) pour l'étanchéité d'une ouverture de tube d'un tube de réception (80) prévu pour recevoir l'extrémité du tube formé par une pluralité d'éléments tubulaires (4), avec :
- un embout tubulaire (73) présentant deux moitiés d'embout tubulaire (74), lequel comporte à la première extrémité, tournée vers le tube, un segment (75) de forme sphérique ou en forme d'entonnoir qui est relié au segment en forme d'entonnoir ou de forme sphérique du dernier élément tubulaire (4) voisin du tube, et
- un élément d'étanchéité (71), présentant deux moitiés d'étanchéité (72), lequel reçoit la seconde extrémité (76), située face à la première extrémité (75), de l'embout tubulaire et la fixe ainsi qu'au moins une lamelle (77) flexible, disposée à l'extérieur dont le diamètre extérieur maximal correspond au moins au diamètre intérieur du tube de réception (80).

20. Dispositif de protection selon la revendication 19,
**caractérisé en ce que** la moitié d'étanchéité (72) comporte plusieurs lamelles (77) dirigées vers la première extrémité (75) de l'embout tubulaire (73).

21. Dispositif de protection selon la revendication 19 ou 20,
**caractérisé en ce que** l'embout tubulaire (74) comporte sur le côté extérieur au moins une bride (79) et l'élément d'étanchéité (71) présente sur le côté intérieur au moins une rainure (78) complémentaire pour recevoir la bride (79) et pour la liaison fixe de l'embout tubulaire (74) et de l'élément d'étanchéité (71).

22. Dispositif de protection selon l'une des revendications précédentes,
**caractérisé par** un dispositif de centrage (90) pour la fixation extérieure sur un élément tubulaire, en vue du centrage et du serrage de l'extrémité du tube formé par une pluralité d'éléments tubulaires (4), dans un tube de réception (80) prévu pour recevoir le tube, avec :
- deux pinces annulaires (91) disposées aux extrémités opposées du dispositif de centrage (90) avec un diamètre intérieur adapté au diamètre extérieur de l'élément tubulaire (4) à centrer,
- plusieurs éléments de réglage de distance (92), disposés sur les deux pinces annulaires (91), pour régler la distance entre les pinces annulaires (91), et
- plusieurs lamelles (93) flexibles, disposées entre les deux pinces annulaires (91) et se bombant vers l'extérieur lors de la réduction de la distance entre les pinces annulaires (91).

23. Dispositif de protection selon la revendication 22,
**caractérisé en ce qu'**il est prévu comme élément de réglage de distance (92) plusieurs boulons filetés traversant les pinces annulaires (91), qui présentent à au moins une extrémité un filetage (94), ce qui fait qu'au moyen d'un écrou (95) vissé sur le filetage (94), la distance entre les pinces annulaires (91) peut être réduite.

24. Dispositif de protection selon l'une des revendications précédentes,
**caractérisé par** un tube de réception (80) pour recevoir l'extrémité du tube formé d'une pluralité d'éléments tubulaires (4), le tube de réception (80) présentant un tube extérieur (81) et un tube (82) intérieur, pouvant coulisser dans le tube extérieur.

25. Moitié de tube pour un dispositif de protection selon l'une des revendications 1 à 24, pour câbles et tuyauteries, en particulier pour câbles marins, avec un segment (12) de forme hémisphérique à une première extrémité et une moitié d'entonnoir (14) à une seconde extrémité opposée à la première extrémité, deux moitiés de tube (2) assemblées formant un élément tubulaire (4) qui comporte à une première extrémité un segment (8) de forme sphérique et à une seconde extrémité, opposée à la première, un segment (10) en forme d'entonnoir, qui peut être reçu et fixé à l'intérieur du segment (8) de forme sphérique d'un élément tubulaire (4) voisin, des éléments tubulaires (4) reliés les uns aux autres en série formant un tube pour recevoir un câble (6) ou une tuyauterie,
**caractérisée en ce que** des entailles (14) sont pratiquées dans le segment (12) de forme hémisphérique et des prolongements (16) sont disposés sur le segment (12) de forme hémisphérique, lesquels sont en prise les unes avec les autres lors de la liaison de deux moitiés de tube (2) pour former un élément tubulaire (4), l'élément tubulaire (4) ne présentant sur l'extérieur ni arêtes vives, ni angles ou arêtes saillants.
